# EUROPEAN PATENT APPLICATION

(11) **EP 4 726 822 A1**
(43) Date of publication of application: **15.04.2026**
(21) Application number: 24823655.6
(22) Date of filing: 10.06.2024
(51) Int. Cl.: H01M 10/04, B65H 3/08, B65H 45/107

(54) **STACKING DEVICE AND STACKING METHOD**

(30) Priority: 12.06.2023 KR 20230074805
(71) Applicant: Youil Energy Tech.Co., Ltd, Anseong-si, Gyeonggi-do 17553 (KR)
(72) Inventor: CHUNG, Youn Gil, Seongnam-si, Gyeonggi-do 13544 (KR)
(74) Representative: do Nascimento Gomes, Rui
(86) International application number: PCT/KR2024/007901
(87) International publication number: WO 2024/258135

(57) **Abstract**

The present disclosure discloses a stacking apparatus including: an electrode stacking device configured to alternately and continuously stack a first electrode and a second electrode on a stacking region using a first rotary body that transports the first electrode and a second rotary body that transports the second electrode; a separator stacking device configured to stack a separator that is connected as one between the first electrode and the second electrode and between the second electrode and the first electrode; and a controller configured to control driving of the electrode stacking device and the separator stacking device. The controller is configured to control an operation of the separator stacking device to stack the separator in a two-dimensional trajectory in an up-down (z-axis) direction and a left-right (x-axis) direction while the stacking region is in a fixed state. According to the present disclosure, a continuous separator may be stacked to separate a positive electrode and a negative electrode from each other without sagging.

## Description

### [Technical Field]

The present disclosure relates to a stacking apparatus and a stacking method, and more particularly, to a method for alternately stacking separators and electrodes in manufacturing electrodes of a secondary battery, and to an apparatus using the same.

### [Background Art]

A battery includes a positive electrode, a negative electrode, and an electrolyte, and generates electrical energy by using a chemical reaction, and may be classified into a primary battery for disposable use and a secondary battery capable of being rechargeable for repeated use.

Secondary batteries are gradually increasing in use due to the advantage of being rechargeable. Secondary batteries are gradually increasing in use due to their advantage of being rechargeable. Among the secondary batteries, lithium-ion batteries have a high energy density per unit weight, so the lithium-ion batteries are used as power sources for electronic communication devices and are widely used in electric vehicles and hybrid vehicles.

Electrodes used in a secondary battery are used as the positive electrode and the negative electrode of the battery to electrically connect the battery and a charging circuit or a discharging circuit.

An electrode may be produced through a process of notching and cutting an electrode sheet in which electrode tabs are formed at regular intervals. Cut electrodes may be stored individually in a magazine. To store the electrodes in the magazine, a task of suctioning the cut electrodes and transporting the cut electrodes to the magazine is required. A process of producing an electrode from an electrode sheet through notching and cutting may be performed continuously.

The electrodes loaded individually in the magazine may be supplied to an electrode stacking device. The electrode stacking device may alternately stack a positive electrode, a separator, and a negative electrode.

An arm portion of the stacking apparatus may suction electrodes loaded in the magazine and transport the electrodes to a stacking region. The arm portion may rotate around an axis and may travel back and forth between the magazine and the stacking region.

A separator is inserted between electrodes (positive electrode and negative electrode) that are stacked in the form of individual sheets, and in a conventional technology, a method in which electrodes move to insert continuous separators has been used. However, there is a problem that a separator fails to tightly wrap an electrode, causing an increase in so-called white content of the separator.

In addition, in the conventional technology, when it takes a long time for the arm portion of the stacking apparatus to move, a time required for an entire stacking process increases.

In addition, in the conventional technology, there is a problem that, prior to stacking, two or more electrodes are suctioned due to static electricity or the like.

As a technology related to the present disclosure, Korean Registered Patent Publication No. 10-2234730 discloses a method for manufacturing an electrode stack for an energy storage device of an automobile, the method relating to folding an electrode strip in which a separator strip is interposed between a cathode and an anode. This related technology relates to folding an anode and a cathode by using a gripper after aligning electrode strips on a horizontal plane, whereas the present disclosure alternately stacks electrodes while inserting separators between the electrodes, and the configuration and effect of both inventions are thus distinguished from each other.

### [Disclosure]

### [Technical Problem]

The problem to be solved by the present disclosure is to provide a stacking apparatus and a stacking method that allow a separator to tightly wrap an electrode in stacking electrodes and separators.

The problem to be solved by the present disclosure is to provide a stacking apparatus and a stacking method that move a separator to be stacked without moving the electrodes already stacked in stacking electrodes and separators.

The problem to be solved by the present disclosure is to provide a stacking apparatus and a stacking method that enable reduction of so-called white content caused by sagging of a separator without elasticity in stacking electrodes and separators.

The problem to be solved by the present disclosure is to provide a stacking apparatus and a stacking method that increase process speed by minimizing a time required for transporting electrodes in stacking electrodes.

The problem to be solved by the present disclosure is to provide a stacking apparatus and a stacking method that enables prevention of two or more electrodes from being suctioned.

The problems to be solved by the present disclosure are not limited to the problems mentioned above, and other problems not mentioned will be clearly understood by those skilled in the art from the description below.

### [Technical Solution]

In order to achieve the above object, according to one embodiment of the technical idea of the present disclosure, a stacking apparatus is provided, the stacking apparatus including: an electrode stacking device configured to alternately and continuously stack a first electrode and a second electrode on a stacking region using a first rotary body that transports the first electrode and a second rotary body that transports the second electrode; and a controller configured to control driving of the electrode stacking device. A first rotation shaft of the first rotary body and a second rotation shaft of the second rotary body are concentric with each other. The controller is configured to control stacking of the first electrode through rotation of the first rotary body and stacking of the second electrode through rotation of the second rotary body in the fixed stacking region.

In addition, the stacking apparatus may be configured such that the first rotary body includes a first arm portion configured to suction the first electrode disposed on a first stage through rotation of a first axis and transport the first electrode to the stacking region, and the second rotary body incudes a second arm portion configured to suction the second electrode disposed on a second stage through rotation of the second axis and transport the second electrode to the stacking region.

In addition, the stacking apparatus may be configured such that the first rotary body includes a third arm portion configured to transport the first electrode disposed in a first magazine to the first stage through simultaneous rotation with the first arm portion, and the second rotary body includes a fourth arm portion configured to transport the second electrode disposed in a second magazine to the second stage through simultaneous rotation with the third arm portion.

In addition, the stacking apparatus may be configured such that the first arm portion and the third arm portion, and the second arm portion and the fourth arm portion are disposed to be coupled to the first axis or the second axis, respectively, with an acute angle therebetween.

In addition, the stacking apparatus may be configured such that the controller controls the first rotary body and the second rotary body so that the first rotary body may rotate within a range of 90 degrees between the stacking region and the first magazine, and the second rotary body may rotate within a range of 90 degrees between the stacking region and the second magazine.

In addition, the stacking apparatus may be configured such that the controller is configured to: control an operation of the separator stacking device that stacks a separator in a zigzag manner while reciprocating between a left edge and a right edge of the stacking region; and to control the separator stacking device to reciprocate along a two-dimensional trajectory in an up-down (z-axis) direction and a left-right (x-axis) direction so that the separator sequentially wraps one side and an upper surface of the first electrode, and after the second electrode is stacked on the separator, sequentially wraps the other side and an upper surface of the second electrode.

In addition, the stacking apparatus further includes a gripper part configured to grip and transport an electrode pack for which stacking is completed, and the controller may be configured to control an entry movement of the gripper part into the stacking region and to control an avoidance movement of the first stage or the second stage so as not to interfere with the gripper part.

In addition, the stacking apparatus may further include a separator stacking device configured to stack a separator, which is formed as a single continuous piece, between the first electrode and the second electrode and between the second electrode and the first electrode, and the controller may be configured to control an operation of stacking the separator along a two-dimensional trajectory in an up-down (z-axis) direction and a left-right (x-axis) direction while the stacking region is fixed.

In addition, the stacking apparatus may be configured such that the separator stacking device includes: a frame installed in the stacking region; driving unit coupled to the frame through a first rotation shaft and configured to cause a reciprocating motion of the frame in an up-down (z-axis) direction and a left-right (x-axis) direction using a cam; a roller coupled to the frame and configured to guide the separator to the stacking region; a denser coupled to the frame and configured to control elasticity of the separator; and a guider coupled to the frame and configured to guide the reciprocating motion of the frame to control a stacking trajectory of the roller.

In addition, the stacking apparatus may be configured that the frame includes: a lever coupled to the driving unit; and a roller bracket coupled to the lever through a second rotation shaft and coupled to the roller.

In addition, the stacking apparatus may be configured such that the lever includes: a power transmission unit coupled to the driving unit through the first rotation shaft; a first trajectory center portion that determines a trajectory center of the lever; and a moving part coupled to the roller bracket.

In addition, the stacking apparatus may be configured such that the guider includes a first guider that is slidably coupled to the roller bracket and guides a two-dimensional trajectory of the roller bracket in the up-down (z-axis) direction and the left-right (x-axis) direction.

In addition, the stacking apparatus may be configured such that the guider further includes a second guider that guides a position of the first trajectory center portion.

In addition, the stacking apparatus may be configured such that the roller bracket includes: a second trajectory center portion coupled to the other end of the lever through the second rotation axis; a guide coupling portion that is slidably coupled to the first guide; and a roller coupling portion coupled to the roller.

In addition, the stacking apparatus may be configured such that the roller includes: a stacking roller configured to stack the separator on the stacking region, the stacking roller includes a lower stacking roller and an upper stacking roller, and the controller is configured to control a motion trajectory of the roller bracket so that the lower stacking roller and the upper stacking roller are vertically disposed.

In addition, the stacking apparatus may be configured such that the first guider includes: a vertical guide that guides the roller in a vertical direction; a horizontal guide that guides the roller in a horizontal direction; an inner rail plate that connects the vertical guide and the horizontal guide; and an outer rail plate that fixes a vertical rail of the vertical guide.

In addition, the stacking apparatus may be configured such that the controller is configured to: control the guide coupling portion to move along the first guide; and control a movement trajectory of the roller coupling portion so that the roller reciprocates along a two-dimensional arc-shaped trajectory in the up-down (z-axis) direction and the left-right (x-axis) direction within the stacking region.

In addition, the stacking apparatus may be configured such that the second guider includes: a base provided with a third rotation shaft; a rotary rail that rotates in combination with the third rotation shaft; and a slider that moves along the rotary rail.

In addition, the stacking apparatus may further include a suction device configured to perform suction of the first electrode and the second electrode that wait in a suction region before stacking of the first electrode and the second electrode, and the suction device include: a suction section that suctions one electrode among electrodes loaded in a magazine through movement control in the up-and-down (z-axis) direction in the suction region using the first suction unit; and a second suction unit that is coupled to the first rotary body and the second rotary body and alternately suctions the electrode with the first suction unit.

In addition, the stacking apparatus may be configured such that the controller is configured to: at a timing of alternation between the first suction unit and the second suction unit; drive the first rotary body and the second rotary body that are coupled to the second suction unit; and set suction of the second suction unit, and control downward movement of the second suction unit while releasing suction of the first suction unit.

In addition, the stacking apparatus may be configured such that the second suction unit is positioned above the first suction unit so as to alternately be positioned above an electrode from an upper side of the electrode.

In addition, the stacking apparatus may be configured such that the first suction unit and the second suction unit are provided as a plurality, and a first suction unit disposed at an outer side among the plurality of first suction units is disposed at an inclination with respect to a vertical direction.

In addition, the stacking apparatus may be configured such that the controller is configured to control the second suction unit to enter between different first suction units.

In addition, the stacking apparatus may further include a blower disposed around the first suction unit disposed at the outer side, and the controller may be configured to control the first suction unit to blow air horizontally toward a lower surface of the electrode while the first suction unit suctions the electrode.

In addition, the stacking apparatus may further include a vibrator coupled to at least some of the plurality of first suction units, and the controller may be configured to control the vibrator to vibrate in the up-and-down (z-axis) direction.

In addition, the stacking apparatus may be configured such that the controller is configured to control a first suction unit not coupled to the vibrator to vibrate in an up-down (z-axis) direction by ON/OFF control of suction.

In addition, the stacking apparatus may be configured such that the controller is configured to control the vibrator to vibrate horizontally to remove wrinkles on the electrode during suction of the first suction unit.

In order to achieve the above object, according to one embodiment of the technical idea of the present disclosure, stacking method performed by a stacking apparatus installed in a stacking region includes: inducing a continuously supplied sheet-shaped separator into the stacking region; alternately stacking a plurality of first electrodes and a plurality of second electrodes in the stacking region; and stacking the separator between the plurality of first electrodes and the plurality of second electrodes. Stacking the separator includes: controlling a roller so that the separator positioned at a stacking start point reciprocates in a left-right (x-axis) direction; and controlling the separator at the stacking start point to reciprocate in an upward (+z-axis) direction and a downward (-z-axis) direction between a movement in a rightward (-x-axis) direction and a movement in a leftward (+x-axis) direction.

In addition, the stacking method may be configured such that stacking the electrodes includes: an electrode suctioning operation of suctioning the first electrode and the second electrode disposed in a storage region; an electrode transporting operation of moving the first electrode and the second electrode, which are suctioned, to the stacking region; and an electrode releasing operation of placing the first electrodes and the second electrodes down in the stacking region.

In addition, the stacking method may be configured such that the electrode suctioning operation includes preventing two or more electrodes from being suctioned due to static electricity by using at least one method among a method using vibration, a method using wind, and a method using a physical tool.

In addition, the stacking method is characterized in that e electrode transporting operation is transporting the first electrode and the second electrode using a rotary body that rotates within an acute angle range.

Specific details of other embodiments are included in the "Specific Details for Carrying Out the Invention" and the attached "Drawings."

The advantages and/or features of the present disclosure and the methods for achieving them will become clear with reference to the various embodiments described in detail below together with the accompanying drawings.

However, the present disclosure is not limited to the configuration of each embodiment disclosed below, but may be implemented in various different forms, and each embodiment disclosed in this specification is provided only to ensure that the disclosure of the present disclosure is complete and to fully inform a person having ordinary skill in the art to which the present disclosure pertains of the scope of the present disclosure, and it should be understood that the present disclosure is defined only by the scope of each claim of the claims.

### [Advantageous Effects]

According to the present disclosure, when stacking an electrode and a separator, the separator may tightly wrap the electrode.

In addition, an electrode pack may be manufactured by moving the separator while the electrode is stationary.

In addition, a process speed may be increased by minimizing a time required for transporting electrodes during electrode stacking.

In addition, during transportation of the electrodes, suction of two or more electrodes is prevented.

The effects that may be obtained by the stacking apparatus and stacking method according to the technical idea of the present disclosure are not limited to the effects mentioned above, and other effects that are not mentioned may be clearly understood by a person having ordinary skill in the technical field to which the present disclosure belongs from the description below.

### [Description of Drawings]

FIG. 1 is an exemplary diagram of a stacking apparatus according to one embodiment of the present disclosure.
FIG. 2 is a front view of a stacking apparatus according to one embodiment of the present disclosure.
FIG. 3 is an exemplary diagram of a separator stacking device according to a first embodiment of the present disclosure.
FIG. 4 is an exemplary diagram of a driving unit according to one embodiment of the present disclosure.
FIG. 5 is an exemplary diagram of a stacked body stacked by a separator stacking device according to the first embodiment of the present disclosure.
FIG. 6 is a front view of a separator stacking device according to the first embodiment of the present disclosure.
FIG. 7 is a right side view of a separator stacking device according to the first embodiment of the present disclosure.
FIG. 8 is a plan view of a separator stacking device according to a first embodiment of the present disclosure.
FIG. 9 is an exemplary diagram of a first guider included in a separator stacking device according to a first embodiment of the present disclosure.
FIG. 10 is a series of exemplary diagrams of a separator stacking method using a separator stacking device according to the first embodiment of the present disclosure.
FIG. 11 is an exemplary diagram of a separator stacking device according to a second embodiment of the present disclosure.
FIG. 12 is a plan view of a separator stacking device according to a second embodiment of the present disclosure.
FIG. 13 is an exemplary diagram of a first guider included in a separator stacking device according to a second embodiment of the present disclosure.
FIG. 14 is a series of exemplary diagrams of a separator stacking method using a separator stacking device according to a second embodiment of the present disclosure.
FIG. 15 is an exemplary diagram of an electrode layer device using an electrode supply method according to the first embodiment of the present disclosure.
FIG. 16 is an exemplary diagram of an electrode stacking device using an electrode supply method according to a second embodiment of the present disclosure.
FIG. 17 is an exemplary diagram of a gripper portion according to one embodiment of the present disclosure.
FIG. 18 is an exemplary diagram of a suction device included in a stacking apparatus according to one embodiment of the present disclosure.
FIG. 19 is an enlarged view of a suction section and a second suction unit.
FIGS. 20 to 26 are exemplary diagrams depicting the process of preventing double-sheet feeding of an electrode S.
FIG. 27 is an exemplary diagram of a vibrator according to one embodiment of the present disclosure.
FIG. 28 is an exemplary diagram of a vibrator according to one embodiment of the present disclosure.
FIG. 29 is an exemplary diagram of a vibrator according to one embodiment of the present disclosure.
FIG. 30 is an exemplary diagram showing positions of electrodes and a push part.
FIG. 31 is an exemplary diagram depicting different positions of electrodes and a push part.
FIG. 32 is an exemplary diagram of a blower according to one embodiment of the present disclosure.
FIG. 33 is an exemplary diagram of a first suction unit and a second suction unit.
FIG. 34 is an exemplary diagram of a first suction unit and a second suction unit.
FIGS. 35 to 37 are exemplary diagrams depicting a loading process of an electrode S.
FIG. 38 is an exemplary diagram of a first suction unit.
FIG. 39 is a flowchart of a stacking method according to one embodiment of the present disclosure.
FIG. 40 is a flowchart of a stacking method according to one embodiment of the present disclosure.
FIG. 41 is a flowchart of a stacking method according to one embodiment of the present disclosure.

### [Best Mode for Carrying Out the Invention]

Before describing the present disclosure in detail, it should be understood that terms or words used in this specification should not be interpreted as being unconditionally limited to usual or dictionary meanings, that an inventor of the present disclosure may appropriately define and use concepts of various terms in order to explain an invention in a best manner, and that these terms or words should be interpreted as meanings and concepts consistent with a technical idea of the present disclosure.

That is, terms used in this specification are used only to describe preferred embodiments of the present disclosure and are not used with an intention to specifically limit contents of the present disclosure, and these terms are defined in consideration of various possibilities of the present disclosure.

In addition, in this specification, singular expressions may include plural expressions unless a context clearly indicates a different meaning, and similarly, plural expressions may include a singular meaning.

Throughout this specification, whenever a component is described as "including" another component, such a description may mean that the component may further include any other component rather than exclude any other component unless specifically stated otherwise.

Furthermore, when a component is described as being "inside or connected to" another component, such a description should be understood as meaning that the component may be installed in direct connection with or in contact with the other component, may be installed spaced apart from the other component by a certain distance, and that, when installed spaced apart from the other component by a certain distance, a third component or means for fixing or connecting the component to the other component may exist and a description of the third component or means may be omitted.

On the other hand, when a component is described as being "directly connected" or "directly coupled" to another component, such a description should be understood as meaning that no third component or means exists.

Likewise, other expressions that describe a relationship between components, such as "between" and "directly between," or "adjacent to" and "directly adjacent to," should be interpreted as having the same meaning.

In addition, in this specification, terms such as "one surface," "the other surface," "one side," "the other side," "first," "second," and the like, if used, are used to clearly distinguish one component from another component, and a meaning of the component is not limited by such terms.

In addition, terms related to position, such as "upper," "lower," "left," "right," and the like, in this specification, if used, should be understood to indicate relative positions of corresponding components in corresponding drawings, and unless absolute positions are specified for these positions, these position-related terms should not be understood to refer to absolute positions.

In addition, in this specification, when specifying reference numerals for each component of each drawing, the same component has the same reference numeral even when shown in a different drawing, that is, the same reference numeral indicates the same component throughout the specification.

In the accompanying drawings of this specification, the size, position, connection relationship, and the like of each component constituting the present disclosure may be described with some exaggeration, reduction, or omission in order to sufficiently clearly convey a technical idea of the present disclosure or for convenience of explanation, and therefore proportions or scales may not be strict.

In addition, in describing the present disclosure, a detailed description of a configuration determined to unnecessarily obscure a gist of the present disclosure, for example, known technology including prior art, may be omitted.

Hereinafter, embodiments of the present disclosure will be described in detail with reference to relevant drawings.

In the x-, y-, and z-axes shown in each drawing, the x-axis direction is defined as a left-right direction of stacking device 1, the y-axis direction is defined as a front-back direction, and the z-axis direction is defined as an up-down direction.

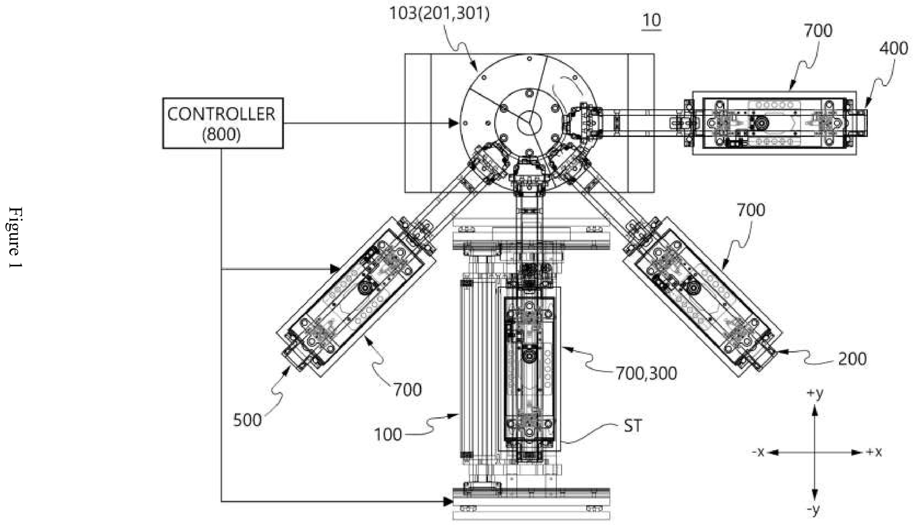

FIG. 1 is an exemplary diagram of a stacking apparatus according to one embodiment of the present disclosure.

Referring to FIG. 1, a stacking apparatus 1 is configured to sequentially stack a first electrode S1 and a second electrode S2 by inserting a separator corresponding to a separation membrane between the first electrode S1 and the second electrode S2, and ultimately manufacture an electrode pack corresponding to a stacked body.

The stacking apparatus 1 may include a separator stacking device 100, an electrode stacking device 103, a suction device 700, and a controller 800.

The separator stacking device 100 is configured to insert a sheet-type continuous separator SP between a first electrode S1 and a second electrode S2 stacked on a stacking region ST.

The electrode stacking device 103 is configured to stack the first electrodes S1 and the second electrodes S2 between the separators SP inserted and stacked by the separator stacking device 100. Details about the electrode stacking device 103 will be described later.

The suction device 700 is configured to suction the first electrodes and the second electrodes. Some components included in the suction device 700 may be installed in a waiting region for electrodes, and some of the remaining components may be installed in a first arm portion 200 to a fourth arm portion 500. Details about the suction device 700 will be described later.

The control unit 800 is configured to control mutual operations of the separator stacking device 100, the electrode stacking device 103, and the suction device 700 included in stacking device 1.

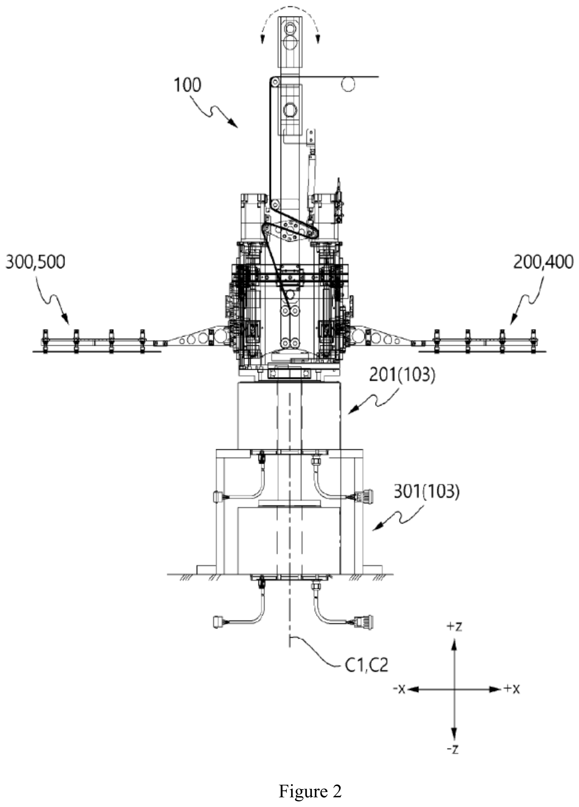

FIG. 2 is a front view of a stacking apparatus according to one embodiment of the present disclosure.

Referring to FIG. 2, the separator stacking device 100 is placed in a central and upper region in the x-axis direction, and the stacking region ST is located below the separator stacking device 100. A first rotary body 201 and a second rotary body 301 may be disposed below the separator stacking device 100 so as to have a different y-coordinate from the separator stacking device 100.

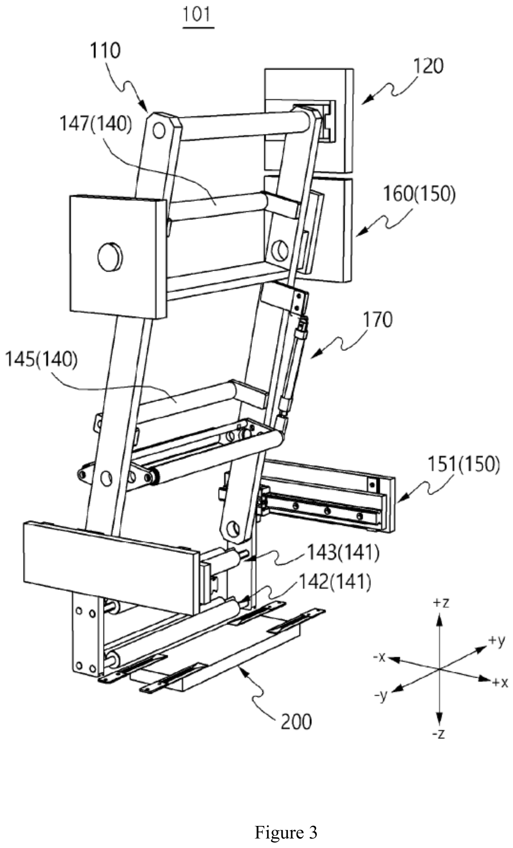

FIG. 3 is an exemplary diagram of a separator stacking device according to one embodiment of the present disclosure.

Referring to FIG. 3, a first separator stacking device 101 may be disposed on the stacking region ST. The first separator stacking device 101 is configured to continuously supply the separator to the stacking region ST and stack the separator SP together with electrodes so as to separate the first electrode S1 and the second electrode S2.

In the stacking region ST where a stacked body, i.e., the stacking of the separator SP, the first electrode S1, and the second electrode S2, is disposed, the first separator stacking device 101 is configured to move an end of a separator before stacking in the left-right (x-axis) direction and the up-down (z-axis) direction so as to stack the separator between the first electrode S1 and the second electrode S2. The first electrode S1 and the second electrode S2 are alternately disposed by the first rotary body 201 and the second rotary body 301, and the first separator stacking device 101 repeats an operation of stacking the continuous separator SP between the first electrode S1 and the second electrode S2.

If a conventional separator stacking device is of a type that moves a stacking region ST where a stacked body is disposed, the first separator stacking device 101 according to a first embodiment of the present disclosure is of a type that moves a separator SP before stacking while the stacking region ST remains fixed.

The first separator stacking device 101 may include a frame 110, a driving unit 120, a roller 140, and a guider 150.

The frame 110 forms a structural frame of the first separator stacking device 101 and is configured to rotate by being rotationally coupled to the driving unit 120. The frame 110 may be installed on the stacking region ST where the stacked body is disposed. As the first electrode S1, the second electrode S2, and the separator SP are stacked on the stacking region ST, the stacking region ST gradually moves downward, so that a height of a position where the separator SP is stacked may be maintained at a constant height in real time.

The driving unit 120 is rotationally coupled to one end of the frame 110 and configured to transmit a rotational force to the frame 110. An electric motor may be used to generate the rotational force. The driving unit 120 is coupled to the frame 110 through a first rotation shaft 122 and configured to cause a reciprocating motion of the frame 110 in the up-down (z-axis) direction and the left-right (x-axis) direction.

The driving unit 120 includes a motor that rotates the first rotation shaft 122. The motor may be directly connected to the first rotation shaft 122, but a main rotation shaft 127 may also be additionally used to rotate the first rotation shaft 122.

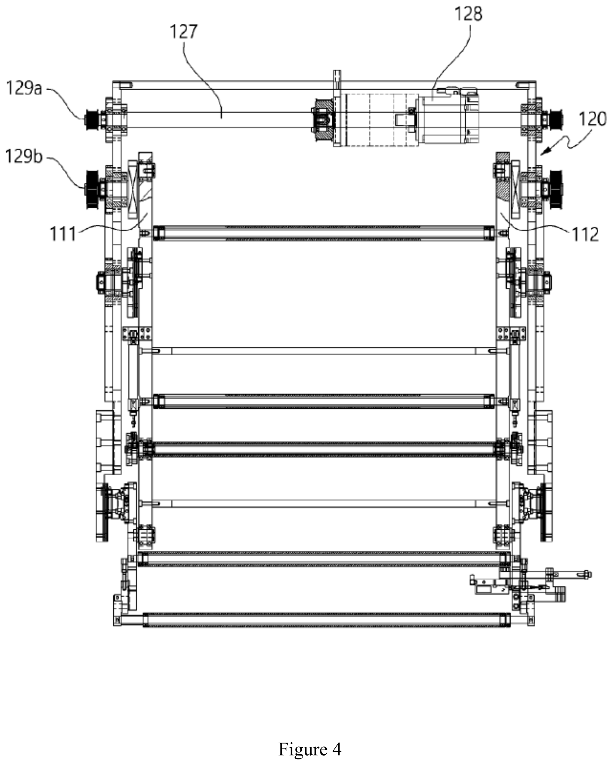

FIG. 4 is an exemplary diagram of a driving unit according to one embodiment of the present disclosure.

Referring to FIG. 4, the driving unit 120 may be configured to further include a main rotation shaft 127, a motor 128, and pulleys 129a and 129b. The motor 128 rotates the main rotation shaft 127, and a rotational force may be transmitted to the first rotation shaft 122 through the pulleys 129a and 129b and a belt. In this case, stable power may be transmitted to the first lever 111 and the second lever 112 using one motor 128. The motor 128 may be located in a middle portion of the main rotation shaft 127 as shown in FIG. 2, or may be located on one side of the main rotation shaft 127.

The roller 140 is coupled to the frame 110 and configured to guide the separator SP to the stacking region ST. A plurality of rollers 140 may be provided at respective coupling positions with the frame 110. The roller 140 may include a stacking roller 141 in particular, and the stacking roller 141 may include a lower stacking roller 142 disposed at a lower portion of the roller bracket 114 and an upper stacking roller 143 disposed at an upper portion of the roller bracket 114.

The guider 150 is configured to guide a trajectory of the frame 110. A plurality of guiders 150 may be disposed at respective coupling positions with the frame 110. For example, a second guider 160 may be disposed between one end and the other end of the frame 110, the second guider 160 being configured to change a rotation radius from a to b so that the other end of the frame 110 may be rotated by a rotation radius of b when one end of the frame 110 is rotated by a rotation radius of a within an angular range of 180 degrees by the driving unit 120. A first guider 151 that guides a movement of the roller bracket 114 belonging to the other end of the frame 110 along a trajectory having a predetermined shape may be disposed at the other end of the frame 110.

The roller bracket 114 may be directly coupled to another type of driving unit, other than a combination of the driving unit 120 and the levers 111 and 112, that causes an arc motion in the up-down and left-right directions.

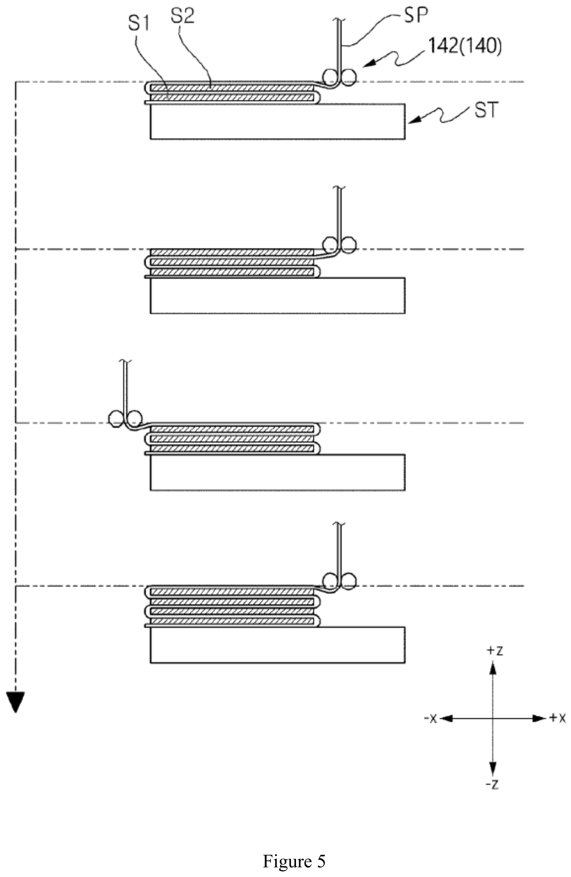

FIG. 5 is an exemplary diagram of a stacked body stacked by a separator stacking device according to one embodiment of the present disclosure.

Referring to FIG. 5, successive views on how the lower stacking roller 142 of the separator stacking device 100 guides and stacks the separator SP are depicted. The lower stacking roller 142 may correspond to a final roller guiding the separator SP. The lower stacking roller 142 draws a continuous trajectory and moves back and forth in the left-right (x-axis) direction and the up-down (z-axis) direction according to an operation of the separator stacking device 100.

Referring to the first and third drawings of FIG. 5, the lower stacking roller 142 may operate so as to include a section in which the lower stacking roller 142 rises from a descended state lower than a surface of an uppermost electrode near edges on both sides of the electrode.

That is, the separator stacking device 100, including the lower stacking roller 142, does not simply reciprocate in the left-right (x-axis) direction, but draws upward and downward trajectories, a two-dimensional trajectory in a Möbius-strip-like shape, near edges on both sides of the first electrode S1 and the second electrode S2. At the end of each cycle, the lower stacking roller 142 returns to the same position. White content generated due to sagging of the separator SP, due to a swing operation of the stacking apparatus 100 in a two-dimensional reciprocating motion that combines left-right (x-axis) and up-down (z-axis) directions, may be controlled to be minimized. That is, the tension of the separator SP between the upper electrode and the lower stacking roller 142 is maintained, or an amount of instantaneous variation in the tension becomes small, thereby allowing the separator SP to be stably stacked.

In addition, since tension of the separator SP is maintained at a turn of the lower stacking roller 142 at left and right ends of a trajectory, shock to the separator SP that may occur when the tension suddenly increases from a state of low tension may be prevented or reduced.

The separator SP that has passed through the lower stacking roller 142 moving along the two-dimensional trajectory is stacked between the electrodes S1 and S2 while reciprocating within a length range of the first electrode S1 and the second electrode S2 that are stacked in the fixed stacking region ST. For reference, a width is determined to be between an edge where tabs of the first electrode S1 and the second electrode S2 are formed and an edge on the opposite side, and a length is determined to be between the edges cut in an electrode sheet.

While the separator SP is continuously supplied and stacked, the first electrode S1 may be stacked between the separators SP by the first rotary body 201, and the second electrode S2 may be stacked between the separators SP by the second rotary body 301.

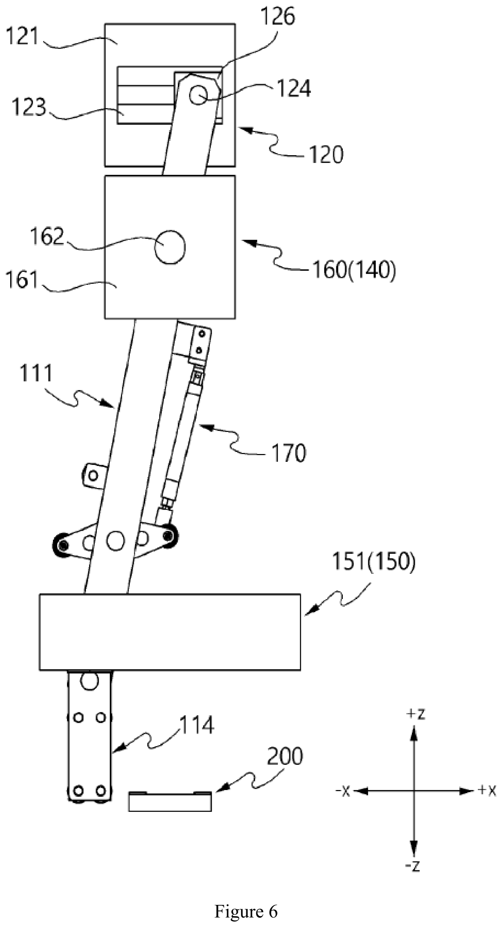

FIG. 6 is a front view of a separator stacking device according to one embodiment of the present disclosure.

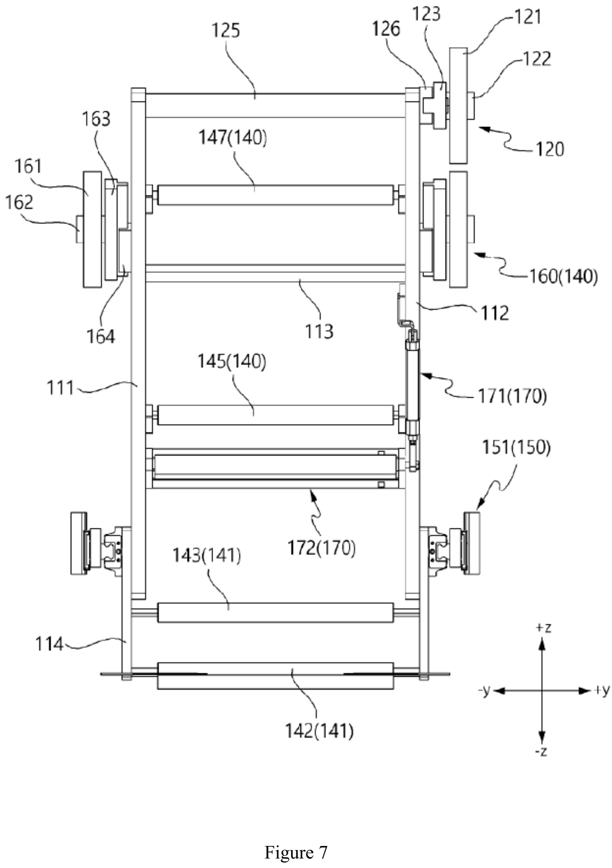

FIG. 7 is a right side view of a separator stacking device according to one embodiment of the present disclosure.

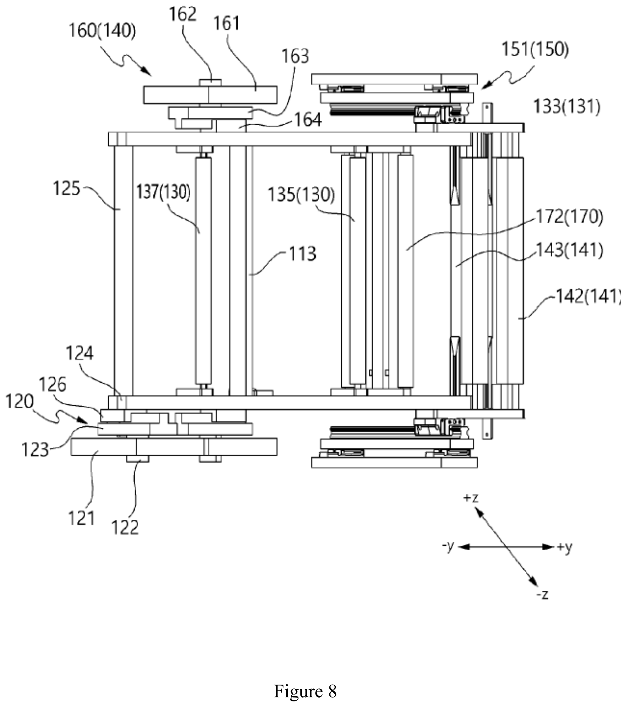

FIG. 8 is a plan view of a separator stacking device according to one embodiment of the present disclosure.

With reference to FIG. 3 as the basic reference for the overall structure, the description will be given with reference to the most suitable drawing for each component.

Referring to FIGS. 3 and 7, the frame 110 may include a first lever 111, a second lever 112, a bridge 113, and a roller bracket 114.

The first lever 111 and the second lever 112 may be coupled to each other with the bridge 113 therebetween. That is, the first lever 111, the second lever 112, and the bridge 113 may be coupled to each other to form a ladder-shaped frame 110. Since the bridge 113 is configured to connect the first lever 111 and the second lever 112, the bridge 113 may be omitted as long as the roller 140 and a shaft 125 have the same function of connecting the first lever 111 and the second lever 112. Overall, the frame 110 includes the bridge 113, and the first lever 111 and the second lever 112 maintained in parallel by the shaft 125 or the roller 140, and has a ladder shape extending in the up-down (z-axis) direction and has a width wider than a width of the separator in the y-axis direction.

Referring to FIG. 7, the first lever 111 and the second lever 112 may include a power transmission unit (one end) 110a coupled to the driving unit 120 via the first rotation shaft 122, a first trajectory center110b determining a trajectory center of the frame 110, and a moving unit (the other end) 110c coupled to the roller bracket 114.

Referring to FIG. 3, a pair of roller brackets 114 may be rotatably coupled to the other ends of the first lever 111 and the second lever 112, respectively. The position of the roller bracket 114 that is connected to the other end of the first lever 111 and the second lever 112 is a point located between one end and the other end. For example, the other ends of the first lever 111 and the second lever 112 may be rotatably coupled in the middle of the roller bracket 114, the first guider 151 may be coupled to one end of the roller bracket 114, and the stacking roller 141 may be coupled to the other end.

The reason for additionally configuring the roller bracket 114 is to control vertical placement of the roller bracket 114 and to keep constant a trajectory of the stacking roller 141 coupled to the roller bracket 114.

A rotational force generated by the driving unit 120 is converted into a reciprocating motion in the up-down (z-axis) direction and the left-right (x-axis) direction and transmitted to the first lever 111 and the second lever 112 of the frame 110, and this reciprocating motion may be guided along a predetermined trajectory by the second guider 160 disposed in the middle of the frame 110 and the first guider 151 disposed at the other end of the frame 110.

A power transmission unit 111a, a first trajectory center 111b, and the moving unit 111c are formed on the first lever 111 and the second lever 112. Since the first trajectory center 111b is formed closer to the power transmission unit 111a than to the moving unit 111c, a larger trajectory having a rotation radius of b may be drawn at the other end of the lever coupled to the roller bracket 114 than a trajectory having a rotation radius of a at one end of the lever coupled to the driving unit 120. And by changing a position of the first trajectory center 111b, a trajectory expansion ratio may be adjusted.

In this case, the roller bracket 114 is configured to deliver a reciprocating motion of a predetermined trajectory of the other end of the frame 110 as a reciprocating motion of a larger trajectory to the stacking roller 141.

Referring to FIGS. 3 and 7, the driving unit 120 may include a base 121, a first rotation axis 122, a cam 123, a camshaft 124, a slider 126, and a shaft 125. The base 121, the cam 123, and the cam shaft 124 may be disposed on both sides of the frame 110 for driving the first lever 111 and the second lever 112. The first lever 111 and the second lever 112 may be connected to each other by the shaft 125. Alternatively, the shaft 125 may be omitted as shown in FIG. 4.

The base 121 includes the first rotation shaft 122 and may be fixed in a non-movable state. A rotation axis of an electric motor may be connected to the first rotation shaft 122. The cam 123 may be connected to the first rotation shaft 122. The shaft 125 is configured to connect the cam shaft 124 between the first lever 111 and the second lever 112. In addition, the first rotation axis 122 coupled to the base 121 may be configured to transmit a driving force to the cam 123 using a gear or a belt.

Referring to FIGS. 3 and 7, the roller 140 may include a stacking roller 141, a mid-roller 145, and an upper roller 147. The mid-roller 145 and the upper roller 147 correspond to guide rollers that guide transport of a separator.

The stacking roller 141 may include the lower stacking roller 142 and the upper stacking roller 143. Here, it is important that a relative position between the lower stacking roller 142 and the upper stacking roller 143 be maintained perpendicular to the direction of gravity.

The roller 140 is configured to guide a separator to the stacking region ST. In order of proximity to the stacking region ST, the lower stacking roller 142, the upper stacking roller 143, the mid-roller 145, and the upper roller 147 may be coupled to the frame 110. Here, the mid-roller 145 and upper roller 147 may be omitted from the configuration due to the presence of a denser 170 to be described later.

Referring to FIGS. 3 and 7, the guider 150 may include a first guider 151 and a second guider 160.

The guider 150 is configured to guide the frame 110 so that the frame 110 may move back and forth while drawing a predetermined trajectory.

As described above regarding the frame 110, the first guider 151 is configured to guide a trajectory of the other end of the frame 110, and the second guider 160 is located in a middle of the frame 110 and configured to deliver a trajectory generated by the driving unit 120 to the other end of the frame 110.

Referring to FIGS. 3 and 8, the second guider 160 may include a base 161, a third rotation axis 162, a rotary rail 163, and a slider 164.

The second guider 160 may be configured such that the base 161 is disposed in a fixed state, the third rotation axis 162 is included, the rotary rail 163 is coupled to the third rotation axis 162, and the slider 164 may slide within a range of the rotary rail 163. For reference, the base 121 and the base 161 may be formed as one piece. As the third rotation axis 162 moves within a predetermined range, movement of the lower stacking roller 142 may be smoothly controlled at a point where a rotational direction of the cam shaft 124 changes within a range of 180 degrees.

Referring to FIGS. 3 and 7, the first separator stacking device 101 may be configured to further include the denser 170. The denser 170 may include a denser drive unit 171 and a denser roll 172. The denser 170 is configured to control tension of the separator by moving the denser roll 172 through the denser drive unit 171. That is, the denser 170 may adjust a loose separator to be tight. The denser 170 basically includes a function of guiding the separator. The denser roll 172 has a plurality of rolls and may control tension of the separator by adjusting rotation angles of the plurality of rolls, and, as long as the above function is performed, may be implemented in a form other than that depicted in FIGS. 1 and 4.

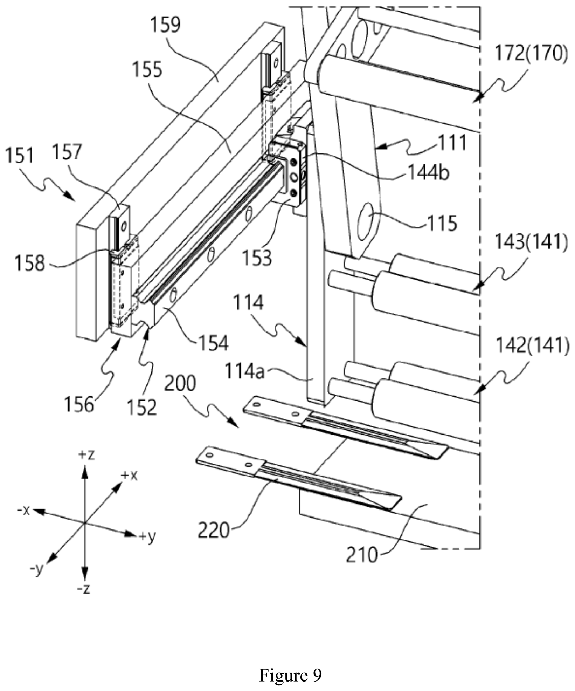

FIG. 9 is an exemplary diagram of a first guider included in a separator stacking device according to one embodiment of the present disclosure.

Referring to FIG. 9, the first guider 151 may include a horizontal guider 152, an inner rail plate 155, a vertical guider 156, and an outer rail plate 159.

The first guider 151 is configured to guide the roller bracket 114 coupled to the stacking roller 141 to slide in the z-axis direction and the x-axis direction. Under the guidance of the first guider 151, the roller bracket 114 may maintain a vertical arrangement thereof while moving in the x-axis direction and the z-axis direction in a three-dimensional space.

The horizontal guider 152 may include a horizontal rail 153 and a slider 154. The horizontal guide 152 is configured to guide the sliding motion of the roller bracket 114 in the x-axis direction.

The vertical guider 156 may include a vertical rail 157 and a slider 158. The vertical guider 156 is configured to guide a sliding motion of the roller bracket 114 in the z-axis direction.

In general, the horizontal guider 152 is coupled to the roller bracket 114, and the inner rail plate 155 may connect between the horizontal guider 152 and the vertical guider 156. The outer rail plate 159 may be coupled to a vertical rail 157.

The roller bracket 114 may include a roller coupling portion 114a, a guider coupling portion 114b, and a second rotation shaft 115. The roller bracket 114 is configured to guide the reciprocating motion of the frame 110 into a trajectory within a predetermined range using the first guider 151 and to deliver the reciprocating motion to the stacking roller 141.

The roller bracket 114 may be coupled to the stack roller 141 at the roller coupling portion 114a, coupled to the first guider 151 at the guider coupling portion 114b, and rotationally coupled to the first lever 111 and the second lever 112 at the second rotation shaft 115.

Hereinafter, a two-dimensional reciprocating motion of the stacking roller 141 in the up-down (z-axis) direction and the left-right (x-axis) direction, which is required for performing a stacking method S100 performed by the first separator stacking device 101 according to the first embodiment of the present disclosure, will be described.

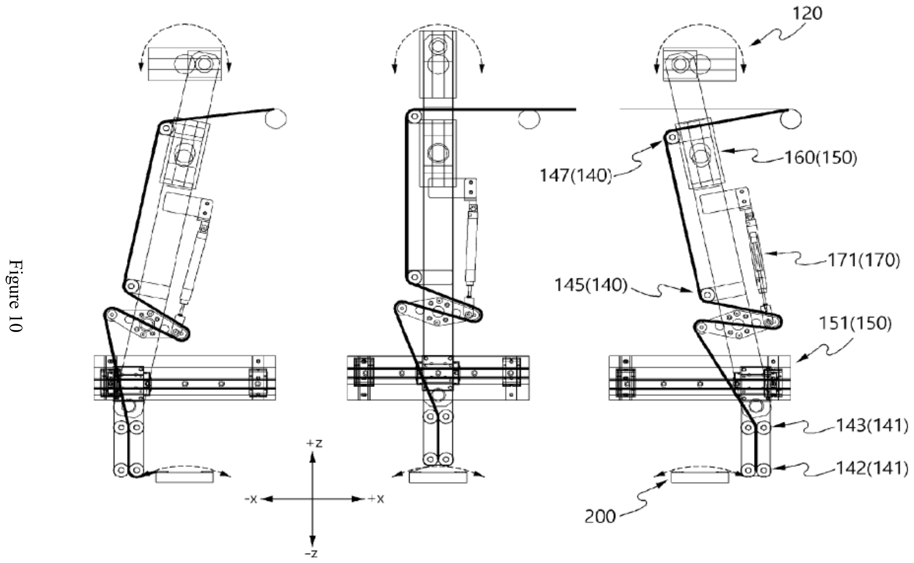

FIG. 10 is a series of exemplary diagrams of a separator stacking method using a separator stacking device according to the first embodiment of the present disclosure.

Referring to FIG. 10, the operation of the first separator stacking device 101 is described by dividing it into three types of operating states.

In the first operation on the left, the stacking roller 141 is disposed on the left side of the stacking region ST, and the driving unit 120 causes one end of the frame 110 to reciprocate in the up-down (z-axis) direction and the left-right (x-axis) direction using the cam 123.

In the second movement in the middle, as the cam shaft 124 of the cam 123 rises, the stacking roller 141 moves to the central position of the stacking region ST, rising in the up-down (z-axis) direction and moving to the right in the x-axis direction. In this process, the separator SP guided by the stacking roller 141 may tightly wrap the edges of the electrode.

In the third movement on the right side, as the cam shaft 124 of the cam 123 moves downward again, the stacking roller 141 moves from the center of the stacking region ST to the right of the stacking region ST, descending in the up-down (z-axis) direction and moving to the right in the left-right (x-axis) direction. In this process, the separator SP guided by the stacking roller 141 performs the action of covering the electrode.

As the cam shaft 124 rises again through the opposite rotation of the driving unit 120, the second operation in the middle and the first operation on the left may be sequentially performed. That is, the driving unit 120 repeatedly performs forward and reverse rotation of a first axis C1 within a range of 180 degrees. The semicircular motion of the cam shaft 124, i.e., the 180-degree arc motion, is converted into an arc motion of the lower stacking roller 142 through the frame 110.

When the driving force of the driving unit 120 is transmitted to the stacking roller 141 through the cam shaft 124, the first guider 151, and the second guider 160, the stacking roller 141 may stack the separator SP between the first electrode S1 and the second electrode S2 through a two-dimensional reciprocating motion of the up-down (z-axis) direction and the left-right (x-axis) direction in the shape of a Möbius strip. In this case, no movement occurs in a width direction of an electrode corresponding to the front-back (y-axis) direction, so the edges of the electrodes and the separator may be aligned.

Hereinafter, a second separator 102 according to a second embodiment of the present disclosure will be described. Among the configurations of the first separator 101, the configurations common to the configurations of the second separator 102 may be referred to in the description of the first separator 101, so only the configurations of the second separator 102, which are different among the configurations of the two embodiments, will be described.

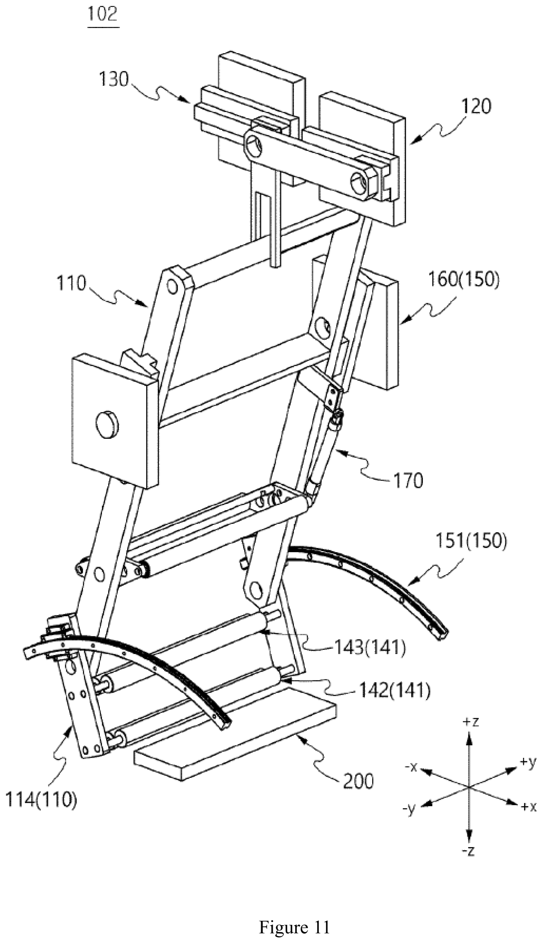

FIG. 11 is an exemplary diagram of a separator stacking device according to a second embodiment of the present disclosure.

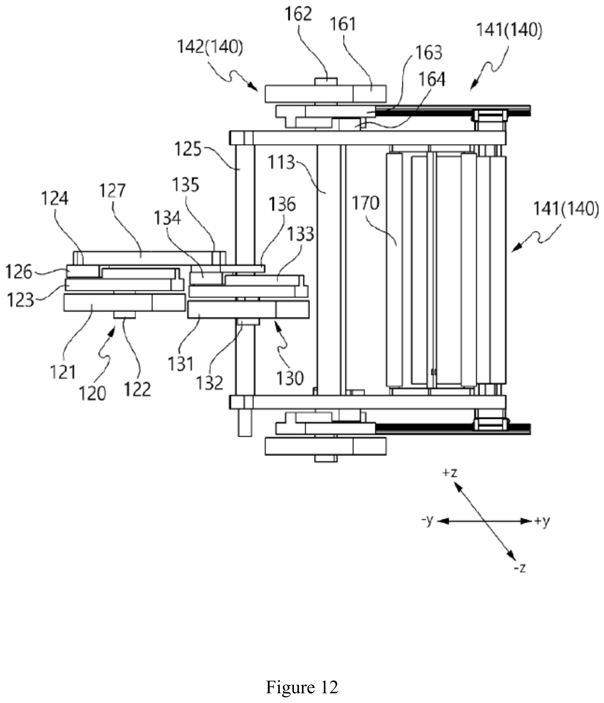

FIG. 12 is a plan view of a second separator stacking device according to a second embodiment of the present disclosure.

Referring to FIGS. 11 and 12, the second separator stacking device 102 according to the second embodiment may be configured such that the driving unit 120 includes a moving unit 130, compared to the first separator stacking device 101 according to the first embodiment. The driving unit 120 generates a rotational force, and the moving unit 130 may use the rotational force to cause a reciprocating motion of the frame 110 in the up-and-down (z-axis) direction and left-right (x-axis) direction.

The driving unit 120 may be coupled to the frame 110 through the first rotation shaft 122, and the moving unit 130 may be coupled to the driving unit 120 through a connecting rod 127.

The rotational force generated by the driving unit 120 is converted into a reciprocating motion in the up-down (z-axis) direction and left-right (x-axis) direction by the moving unit 130 and delivered to the first lever 111 and the second lever 112 of the frame 110, and the reciprocating motion may be guided along a predetermined trajectory by the second guider 160 disposed in the middle of the frame 110 and the first guider 151 disposed at the other end of the frame 110.

The driving unit 120 may include a base 121, a first rotation shaft 122, a cam 123, a cam shaft 124, a shaft 125 and a connecting rod 127.

The shaft 125 is configured to connect the cam shaft 124 between the first lever 111 and the second lever 112. In addition, the first rotation axis 122 coupled to the base 121 may be configured to transmit a driving force to the cam 123 using a gear or a belt.

The moving unit 120 may include a base 131, a rail 133, a slider 134, and a jig 136. The base 131, the rail 133, and the slider 134 may be disposed on both sides of the frame 110 for driving the first lever 111 and the second lever 112.

A first-second rotation shaft 132 may be formed on the base 131, and a cam shaft 135 may be formed on the slider 134. The first-second rotation shaft 132 and the cam shaft 124 may be connected by the connecting rod 127. The connecting rod 127 is configured to convert a rotational force generated by the driving unit 120 into a reciprocating motion and deliver the reciprocating motion to the moving unit 130. The slider 134 may slide within a range of the rail 133. When the rotational force is transmitted to the moving part 130, the slider 134 performs a reciprocating motion, and the jig 136 coupled to the slider 134 may move the shaft 125 to cause the frame 110 to reciprocate.

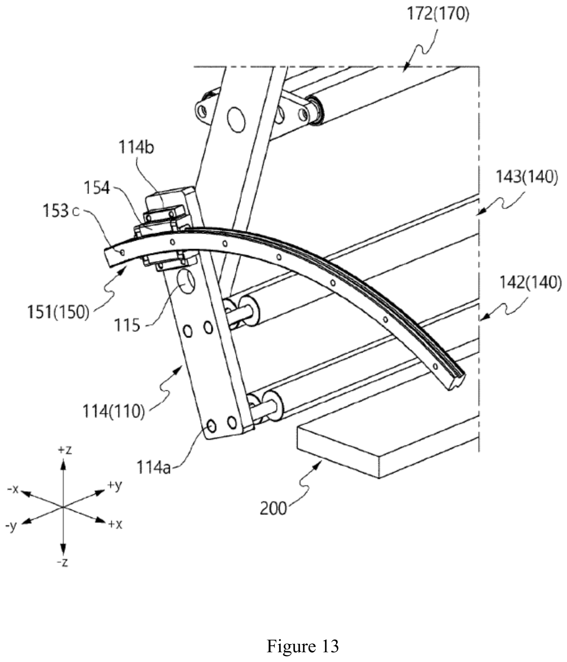

FIG. 13 is an exemplary diagram of a first guider included in a separator stacking device according to a second embodiment of the present disclosure.

Referring to FIG. 13, the first guider 151 may include a curved rail 153c and a slider 154. The roller bracket 114 is coupled to the slider 154 to form a trajectory along the curved rail 153c, and the trajectory is delivered to the stacking roller 141. The curved rail 153c includes the functions of a horizontal rail and a vertical rail. Therefore, the slider 154 may move in a two-dimensional arch-shaped trajectory along the curved rail 153c.

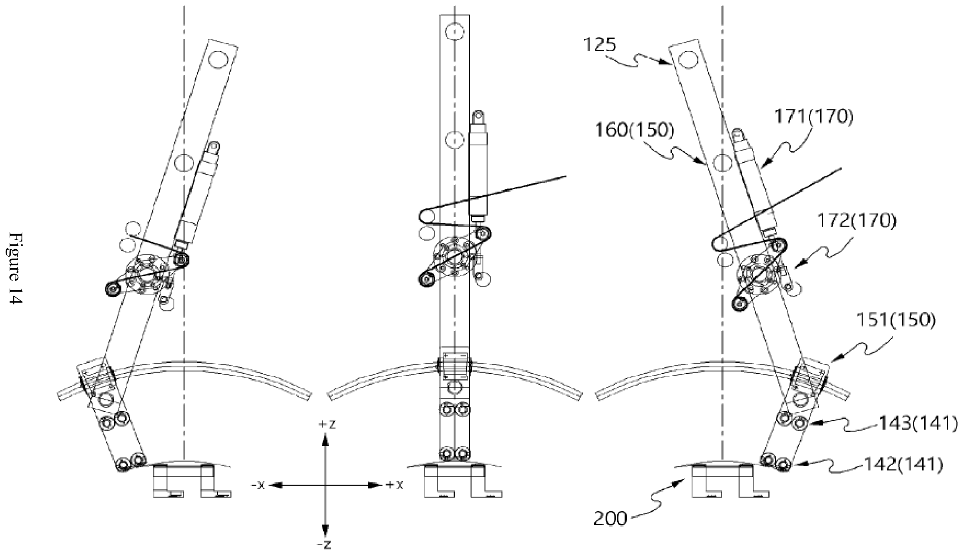

FIG. 14 is a series of exemplary diagrams of a separator stacking method using a separator stacking device according to a second embodiment of the present disclosure.

Referring to FIG. 14, the operation of the second separator stacking device 102 is described by dividing the operation into three operation states.

In the first operation on the left, the stacking roller 141 is disposed on the left side of the stacking region ST, and the driving unit 120 causes one end of the frame 110 to reciprocate in the up-down (z-axis) direction and the left-right (x-axis) direction using the cam 123.

In the second movement in the middle, as the cam shaft 124 of the cam 123 rises, the stacking roller 141 moves to the central position of the stacking region ST, rising in the up-down (z-axis) direction and moving to the right in the x-axis direction. In this process, the separator SP guided by the stacking roller 141 may tightly wrap the edges of the electrode.

In the third movement on the right side, as the cam shaft 124 of the cam 123 moves downward again, the stacking roller 141 moves from the center of the stacking region ST to the right of the stacking region ST, descending in the up-down (z-axis) direction and moving to the right in the left-right (x-axis) direction. In this process, the separator SP guided by the stacking roller 141 performs the action of covering the electrode.

As the cam shaft 124 rises again through the opposite rotation of the driving unit 120, the second operation in the middle and the first operation on the left may be sequentially performed. That is, the driving unit 120 repeatedly performs forward and reverse rotation of the first rotation shaft 122 within a range of 180 degrees.

When the driving force of the driving unit 120 is transmitted to the stacking roller 141 through the cam shaft 124, the first guider 151, and the second guider 160, the stacking roller 141 may stack the separator SP between the first electrode S1 and the second electrode S2 through a two-dimensional reciprocating motion of the up-down (z-axis) direction and the left-right (x-axis) direction in the shape of a Möbius strip.

Hereinafter, an electrode stacking device according to an embodiment of the present disclosure will be described.

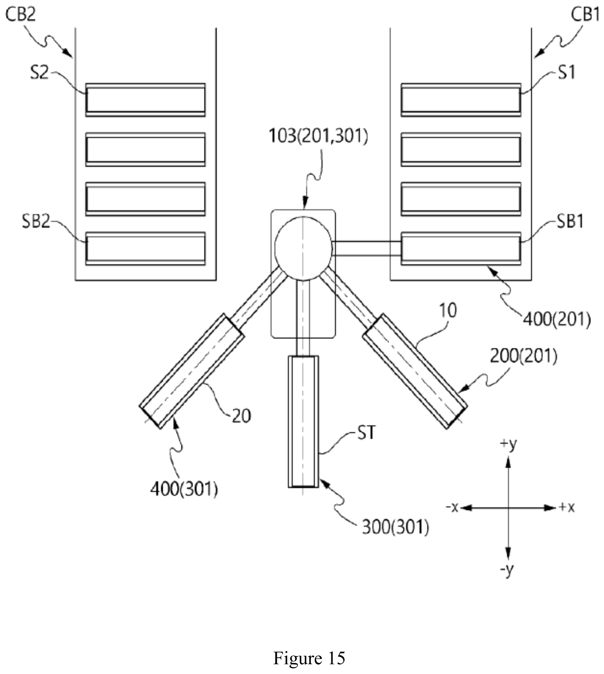

FIG. 15 is an exemplary diagram of an electrode layer device using an electrode supply method according to the first embodiment of the present disclosure.

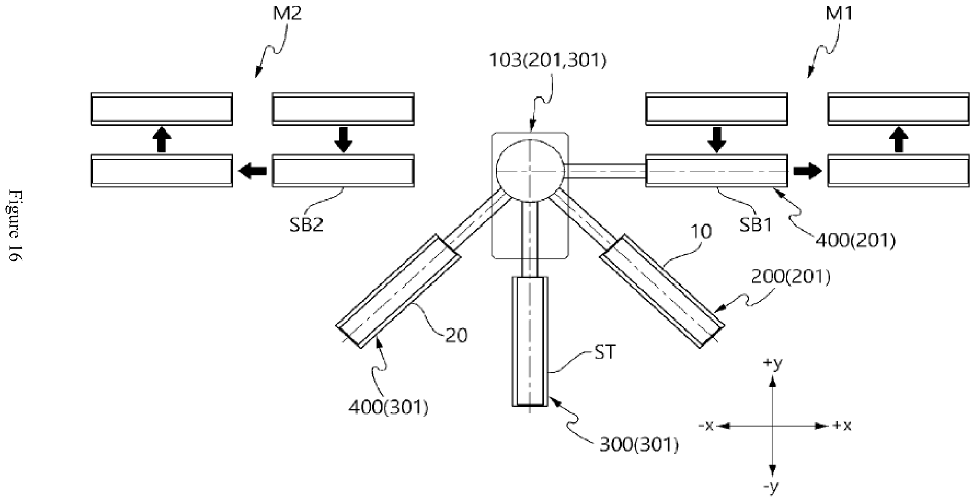

FIG. 16 is an exemplary diagram of an electrode layer device using an electrode supply method according to a second embodiment of the present disclosure.

Referring to FIG. 15, the first electrode S1 may remain in a first waiting region SB1 via a first conveyor belt CB1, and the second electrode S2 may remain in a second waiting region SB2 via a second conveyor belt CB2.

Referring to FIG. 16, the first electrode S1 is contained in a first magazine M1, and the first magazine M1 may be placed in the first waiting region SB1 through position change. The second electrode S2 is also contained in a second magazine M2, and the second magazine M2 may be placed in the second waiting region SB2 through position change.

Referring to FIGS. 15 and 16, the first electrode S1 of the first waiting region SB1 may be moved to a first stage 10 by the third arm portion 400 of the electrode stacking device 103 and may be moved to the stacking region ST by the first arm portion 200 of the electrode stacking device 103. And the second electrode S2 of the second waiting region SB2 may be moved to a second stage 20 by the fourth arm portion 500 of the electrode stacking device 103 and may be moved to the stacking region ST by the second arm portion 300 of the electrode stacking device 103. When the first electrode S1 is stacked on the stacking region ST, the separator stacking device 100 described above intervenes in the stacking region ST, stacks the separator SP on the first electrode S1, and then stacks the second electrode S2 thereon, and this cycle is repeated.

Hereinafter, the electrode stacking device 103 that moves a first electrode S1 waiting in the first magazine M1 and the second electrode S2 waiting in the second magazine M2 to the stacking region will be described.

Referring back to FIG. 1, the electrode stacking device 103 may include a first rotary body 201 and a second rotary body 301.

The first rotary body 201 includes a first axis C1, a first arm portion 200, and a third arm portion 400, and the controller 800 is configured to control rotation of the first arm portion 200 and the third arm portion 400 in the left-right directions (x-axis, y-axis) and movement of the first arm portion 200 and the third arm portion 400 in the up-down (z-axis) direction about the first axis C1. The first arm portion 200 and the third arm portion 400 are configured to suction and transport the first electrode S1 using the suction device 700.

The second rotary body 301 includes a second axis C2, a second arm portion 300, and a fourth arm portion 500, and the controller 800 is configured to control rotation of the second arm portion 300 and the fourth arm portion 500 in the left-right (x-axis, y-axis) direction and movement of the second arm portion 300 and the fourth arm portion 500 in the up-down (z-axis) direction about the second axis C2. The second arm portion 300 and the fourth arm portion 500 are configured to suction and transport the second electrode S2 using the suction device 700.

A through-hole is formed in one of the first axis C1 of the first rotary body 201 and the second axis C2 of the second rotary body 301, and the other axis is disposed in the through-hole, so that the first axis C1 and the second axis C2 are concentric with each other, and, in this manner, the first rotary body 201 and the second rotary body 301 may be disposed at different heights while sharing the same x-axis coordinate and y-axis coordinate. The first rotary body 201 and the second rotary body 301 may be driven by different motors.

The first magazine M1 loaded with the first electrode S1 is disposed on one side of the stacking region ST in the left-right (x-axis) direction. A plurality of first magazines M1 loaded with the first electrodes S1 may be disposed. One of the plurality of first magazines M1 is disposed in the first waiting region SB1, i.e., the suction region, for the first electrode S1 in a movement path of the third arm portion 400. The plurality of first magazines M1 may be sequentially transported to be positioned in the first waiting region SB1 for the first electrode S1. For example, as shown in FIG. 15, four first magazines M1 may be transported in a clockwise direction.

The second magazine M2 loaded with the second electrode S2 is disposed on the other side of the stacking region ST in the left-right (x-axis) direction. A plurality of second magazines M2 loaded with the second electrodes S2 may be disposed. One of the plurality of second magazines M2 is positioned in the second waiting region SB2 for the second electrode S2 in a movement path of the fourth arm portion 500. The plurality of second magazines M2 may be sequentially transported to be positioned in the second waiting region SB2 of the second electrode S2. For example, as shown in FIG. 14, four second magazines M2 may be transported in a counterclockwise direction.

The centers of the first magazine M1 disposed in the first waiting region SB1 for the first electrode S1 and the second magazine M2 disposed in the second waiting region SB2 for the second electrode S2 may be arranged to be positioned on an imaginary straight line passing through the centers of the first axis C1 and the second axis C2. Here, the first axis C1 corresponds to the center of rotation of the first arm portion 200 and the third arm portion 400, and the second axis C2 corresponds to the center of rotation of the second arm portion 300 and the fourth arm portion 500.

The first stage 10 is a place where the first electrode S1 transported from the first magazine M1 waits before being transported to the stacking region ST. The first stage 10 is disposed on one side of the stacking region ST in the left-right (x-axis) direction. This first stage 10 may include a position adjustment means capable of adjusting a position corresponding to a suction setting position of the first arm portion 200 and a suction release position of the third arm portion 400.

The second stage 20 is a place where the second electrode S2 transported from the second magazine M2 waits before being transported to the stacking region ST. The second stage 20 is disposed on the other side of the stacking region ST in the left-right (x-axis) direction. This second stage 20 may include a position adjustment means capable of adjusting a position corresponding to a suction setting position of the second arm portion 300 and a suction release position of the fourth arm portion 500. In addition, the second stage 20 may be disposed to be movable in the up-and-down (z-axis) direction so as not to interfere with movement of a gripper part 600.

An angle R1 between the stacking region ST and the first stage 10, with reference to the first axis C1 as a center axis, is an acute angle. And an angle R2 between the stacking region ST and the second stage 20, with reference to the second axis C2 as a center axis, is also an acute angle. Accordingly, at least a part of the first stage 10 and at least a part of the second stage 20 are disposed to overlap with the stacking region ST in the front-back (y-axis) direction, respectively.

This is to minimize a path through which the first electrode S1 and the second electrode S2 are transported from the first magazine M1 or the second magazine M2 to the stacking region ST, thereby significantly reducing a time for stacking. And the first electrode S1 and the second electrode S2 may have the same shape.

With reference to the first axis C1 as a central axis, an angle between the stacking region ST and the first magazine M1 may be 90°, the angle R1 between the stacking region ST and the first stage 10 may be 45°, and an angle between the first stage 10 and the first magazine M1 may be 45°.

With reference to the second axis C2 as a central axis, an angle between the stacking region ST and the second magazine M2 may be 90°, the angle R2 between the stacking region ST and the second stage 20 may be 45°, and an angle between the second stage 20 and the second magazine M2 may be 45°.

However, these angles correspond to one embodiment, and the angle R1 between the stacking region ST and the first stage 10 may be an acute angle, and an angle between the first stage 10 and the first magazine M1 may also be an acute angle. And the angle R1 between the stacking region ST and the first stage 10 and the angle between the first stage 10 and the first magazine M1 may be identical.

This relationship may be equally applied to the stacking region ST, the second stage 20, and the second magazine M2.

The separator stacking device 100 may continuously supply a sheet-type strip-shaped separator SP wound on a roll from the top to the bottom to the stacking region ST.

The first arm portion 200 rotates about the first axis C1 to suction the first electrode S1 placed on the first stage 10 and transport the first electrode S1 to the stacking region ST. The third arm portion 400 rotates about the first axis C1 to suction the first electrode S1 placed on the first magazine M1 and transport the first electrode S1 to the first stage 10.

The second arm portion 300 rotates about the second axis C2 to suction the second electrode S2 placed on the second stage 20 and transport the second electrode S2 to the stacking region ST. The fourth arm portion 500 rotates about the second axis C2 to suction the second electrode S2 placed on the second magazine M2 and transport the second electrode S2 to the second stage 20.

An angle formed by the first arm portion 200 and the third arm portion 400, with reference to the first axis C1 as a central axis, is less than 90°. For example, the angle formed by the first arm portion 200 and the third arm portion 400 may be 45°.

An angle formed by the second arm portion 300 and the fourth arm portion 500, with respect to the second axis C2 as a central axis, is less than 90°. For example, an angle formed by the second arm portion 300 and the fourth arm portion 500 may be 45°.

The first arm portion 200 and the third arm portion 400 may be configured to rotate integrally about the first axis C1. And the second arm portion 300 and the fourth arm portion 500 may be configured to rotate integrally about the second axis C2.

The gripper part 600 is configured to transport an electrode pack, for which stacking is completed, from the stacking region ST to a region outside the stacking region ST. The gripper part 600 may include a guide rail 610 and a gripper 620 that moves along the guide rail 610. The guide rail 610 may be elongated along the left and right (x-axis) direction. The gripper 620 is configured to grip the electrode pack for which stacking is completed.

When the first arm portion 200 and the third arm portion 400 rotate counterclockwise about the first axis C1, the first arm portion 200 is aligned with the first stage 10 and the third arm portion 400 is aligned with the first magazine M1. At this point, the separator stacking device 100 moves to the right side in the drawing and is aligned with the right edge of the stacking region ST.

The first arm portion 200 suctions the first electrode S1 placed on the first stage 10. At this point, the first stage 10 may be an alignment stage that adjusts the position of the first electrode S1 in response to the suction position of the first arm portion 200. At the same time, the third arm portion 400 suctions the first electrode S1 loaded in the first magazine M1.

Thereafter, when the first arm portion 200 and the third arm portion 400 rotate clockwise about the first axis C1, the first arm portion 200 is aligned with the stacking region ST1 and the third arm portion 400 is aligned with the first stage 10. At this point, the first arm portion 200 stacks the first electrode S1 on the stacking region ST. At the same time, the third arm portion 400 places the first electrode S1, taken from the first magazine M1, on the first stage 10.

In addition, when the second arm portion 300 and the fourth arm portion 500 rotate clockwise about the second axis C2, the second arm portion 300 is aligned with the second stage 20 and the fourth arm portion 500 is aligned with the second magazine M2. The second arm portion 300 suctions the second electrode S2 placed on the second stage 20. At this point, the second stage 20 may be an alignment stage that adjusts the position of the second electrode S2 in response to the suction position of the second arm portion 300. At the same time, the fourth arm portion 500 suctions the second electrode S2 loaded in the second magazine M2.

Thereafter, when the second arm portion 300 and the fourth arm portion 500 rotate counterclockwise about the second axis C2, the second arm portion 300 is aligned to the stacking region ST and the fourth arm portion 500 is aligned to the second stage 20.

Meanwhile, the separator stacking device 100 moves to the left side in the drawing and is aligned with the left edge of the stacking region ST. And the second arm portion 300 stacks the second electrode S2 on the stacking region ST. At the same time, the fourth arm portion 500 places the second electrode S2, taken from the magazine M2, on the second stage 20.

In this way, a distances between the first stage 10 and the stacking region ST and a distance between the second stage 20 and the stacking region ST are short on a path of rotation of the first arm portion 200 and the second arm portion 300, and a distance between the first stage 10 and the first magazine M1 and a distance between the second stage 20 and the second magazine M2 are short on a path of rotation of the third arm portion 400 and the fourth arm portion 500, thereby greatly improving a stacking speed.

The separator stacking device 100 may stack the separator SP, which is continuously supplied from the top to the bottom, in a zigzag shape between the first electrode S1 and the second electrode S2 while reciprocating between the left edge and the right edge of the stacking region ST.

While the separator stacking device 100 moves between the left edge and the right edge of the stacking region ST, the stacking roller 141 is used to fold the separator SP so that the separator SP wraps the side surfaces of the first electrode S1 and the second electrode S2.

When the first arm portion 200 moves to the first stage 10 to suction the first electrode S1, and the third arm portion 400 moves to the first magazine M1 to suction another first electrode S1, the second arm portion 300 moves to the stacking region ST to suction the second electrode S2 and the fourth arm portion moves to the second stage 20 to suction another second electrode S2. After the second electrode S2 is stacked on the stacking region ST, the separator stacking device 100 moves from the right edge to the left edge of the stacking region ST so that the separator SP wraps the upper surface of the second electrode S2, but moves upward from the left edge so that the separator wraps the side surface of the second electrode S2.

Next, when the first arm portion 200 suctions the first electrode S1 and moves to the stacking region ST and the third arm portion 400 suctions another first electrode S1 and moves to the first stage 10, the third arm portion 400 moves to the second stage 20 to suction the second electrode S2 and the fourth arm portion 500 moves to the second magazine M2 to suction another second electrode S2. After the first electrode S1 is stacked on the stacking region ST, the separator stacking device 100 moves from the left edge to the right edge of the stacking region ST to wrap the upper surface of the first electrode S1 with the separator SP, and moves upward again to wrap the side surface of the first electrode S1.

In this way, the separator stacking device 100 wraps the separator SP on the upper and side surfaces of the first electrode S1 and the second electrode S2 while forming a two-dimensional trajectory in the up-down (z-axis) direction and the left-right (x-axis) direction between the left edge and the right edge of the stacking region ST.

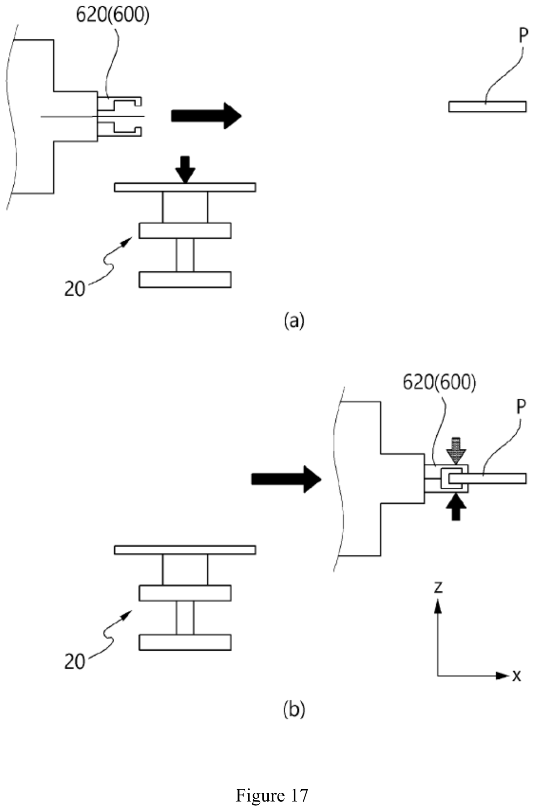

FIG. 17 is an exemplary diagram of a gripper portion according to one embodiment of the present disclosure.

Referring to FIGS. 1 and 17, the second stage 20 is positioned on a path of the gripper 620 toward the stacking region ST. This is because the second stage 20 is disposed to overlap with the stacking region ST in the left-right (x-axis) direction in order to increase a stacking speed. Accordingly, as shown in (a) of FIG. 17, when the gripper 620 moves toward the stacking region ST after stacking is completed, the second stage 20 moves to a position lower than the gripper 620 so that the second stage 20 does not interfere therewith.

The guide rail 610 may be positioned above the stacking region ST in consideration of the second stage 20 moving up and down.

As shown in (b) of FIG. 17, when the second stage 20 moves downward and space is secured, the gripper 620 moves toward the stacking region ST and grips the electrode pack P on which stacking is completed. Afterwards, the gripper 620 may transport an electrode pack P to the wrapping area. The second stage 20 may move up and down by a cylinder or motor. Contrary to the above description, the first stage 10 may be disposed on the path of the gripper 620 toward the stacking region ST.

### <Suction Device>

Among the electrodes including the first electrode S1 and the second electrode S2, the first electrode S1 remains in the first waiting region SB1, and the second electrode S2 remains in the second waiting region SB2. When a part of the suction device 700 installed in the first waiting region SB1 suctions the first electrode S1, a part of a suction device installed in the third arm portion 400 receives the first electrode S1 and transports the first electrode S1 from the first waiting region SB1 to the first stage 10. When a part of the suction device 700 installed in the second waiting region SB2 suctions the second electrode S2, a part of the suction device 700 installed in the fourth arm portion 500 receives the second electrode S2 and transports the second electrode S2 from the second waiting region SB2 to the second stage 20. And a part of the suction device 700 installed in the first arm portion 200 suctions the first electrode S1 in the first stage 10 and transports the first electrode S1 to the stacking region ST and stacks the first electrode S1, and after the separator SP is stacked on the first electrode S1, a part of the suction device 700 installed in the second arm portion 300 suctions the second electrode S2 in the second stage 20 and transports the second electrode S2 to the stacking region ST and stacks the second electrode S2 on the separator SP. After this type of cycle is repeated, when one electrode pack is completed, the electrode pack is moved out of the stacking region ST through the gripper part 600, and stacking of a new electrode pack on the stacking region ST begins again.

Hereinafter, the suction device 700 according to one embodiment of the present disclosure will be described. Since a plurality of suction devices 700 may be provided with the same configuration for suction of the first electrode S1 and the second electrode S2, suction of the electrode S will be described without distinction between S1 and S2.

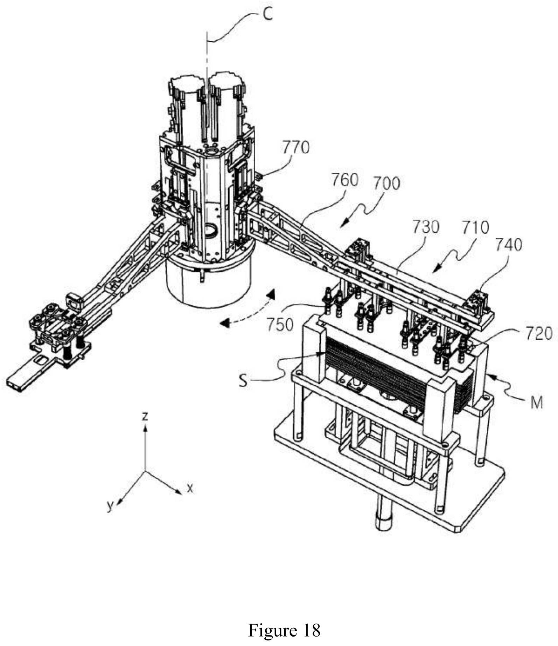

FIG. 18 is an exemplary diagram of a suction device included in a stacking apparatus according to one embodiment of the present disclosure.

Referring to FIG. 18, in one embodiment of the present disclosure, the stacking apparatus 1 may include a suction device 700 configured to transport an electrode S in order to feed an electrode loaded in a magazine M into the process. In addition, the suction device 700 is characterized by including a suction section 710 configured to prevent double-sheet feeding.

The double-sheet feeding refers to a phenomenon in which, during a process in which the electrode S is suctioned and loaded by the suction device 700, another electrode S is attached to a lower portion of the suctioned electrode S and is loaded together.

The stacking apparatus 1 is characterized in that, in order to increase a process speed, before a second suction unit 750 of the suction device 700 enters a suction region, a first suction unit 720 lifts the electrode S in advance from the suction region and separates another electrode S that may be attached to the lower portion of the electrode S.

The electrode S may be loaded into the magazine M. The suction section 710 may be disposed above the magazine M.

The suction device 700 may include a suction section 710 and a second suction unit 750. And the suction section 710 may include a first suction unit 720, a body 730, and a suction driving unit 740.

The suction section 710 is configured to initially suction the electrode S from an upper side of the magazine M. The suction section 710 has a function to prevent the phenomenon of double-sided printing.

The first suction unit 720 is configured to contact the electrode S and suction the electrode S for the first time. A plurality of first suction units 720 may be disposed.

The body 730 may be disposed above the magazine M.

The suction driving unit 740 may be disposed in the body 730. The suction driving unit 740 is connected to the first suction unit 720 and may move the first suction unit 720 in the up-and-down (z-axis) direction.

The second suction unit 750 basically includes a suction function and is configured to move to the suction section 710 and receive the electrode S from the suction section 710. The electrode S may be initially suctioned by the suction section 710 and then transferred to the second suction unit 750.

The second suction unit 750 may be installed in an arm portion 760 (a first arm portion 200 to a fourth arm portion 500). In a rotary body 770, a first rotary body 201 may drive the first arm portion 200 and the third arm portion 400, and a second rotary body 301 may drive the second arm portion 300 and the fourth arm portion 500.

The arm portion 760 may be disposed to be rotatable about the axis C (a first axis C1, a second axis C2). The second suction unit 750 may be fixed to a lower side of the arm portion 760. The arm portion 760 may be controlled to move to an upper side of the magazine M in which the suction section 710 is installed.

The rotary body 770 may move in the up-and-down (z-axis) direction while rotating the arm portion 760. The arm portion 760 may be slidably connected to the rotary body 770.

The second suction unit 750 may rotate about the axis C together with the arm portion 760 and may also move in the up-and-down (z-axis) direction.

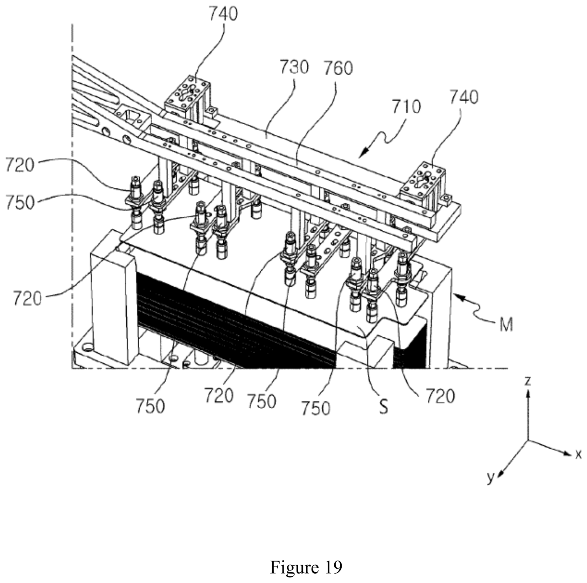

FIG. 19 is an enlarged view of a suction section and a second suction unit.

Referring to FIG. 19, the second suction unit 750 of the suction device 700 may be disposed below the arm portion 760. The second suction unit 750 may be arranged in double rows. The second suction units 750 arranged in double rows may be arranged to form a pair with reference to the longitudinal (y-axis) direction of the electrode S in a state where the second suction unit 570 has entered the suction section 710. A second suction unit 750 disposed in one row of the second suction units 750 arranged in double rows may suction one side of the electrode S in the longitudinal (y-axis) direction, and a second suction unit 750 disposed in the other row of the second suction units 750 arranged in double rows may suction the other side of the electrode S in the longitudinal (y-axis) direction.

The first suction unit 720 of the suction section 710 may also be arranged in double rows. The first suction units 720 may be arranged in double rows so as to form a pair in the left-right (x-axis) direction on the upper side of the magazine M. The first suction unit 720 may also be disposed below the arm portion 760. A first suction unit 720 disposed in one row of the first suction units 720 arranged in double rows may suction one side of the electrode S in the left-right (x-axis) direction, and a first suction unit 720 disposed in the other row of the first suction units 720 arranged in double rows may suction the other side of the electrode S in the horizontal (x-axis) direction.

The second suction unit 750 may be interposed between the first suction units 720 with reference to the front-back (y-axis) direction of the electrode S. Accordingly, the second suction unit 750 may suction different regions of the electrode S with reference to the front-back (y-axis) direction of the first suction unit 720 and the electrode S.

These second suction unit 750 and first suction unit 720 may be aligned to overlap the electrode S in the up-down (z-axis) direction and be positioned on the inside of the electrode S.

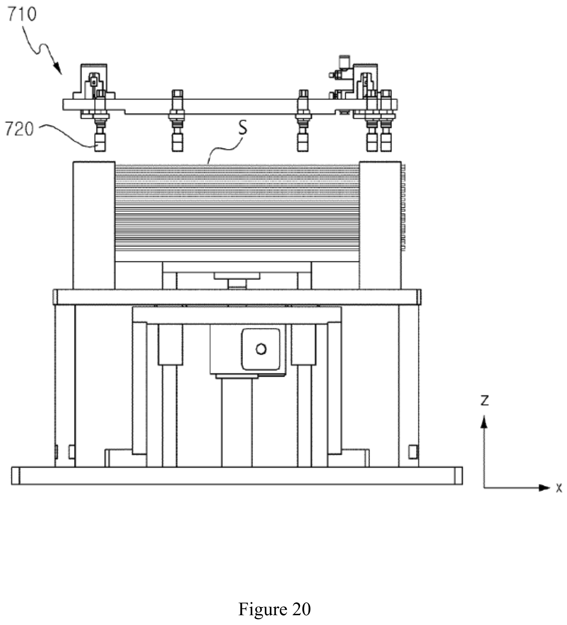

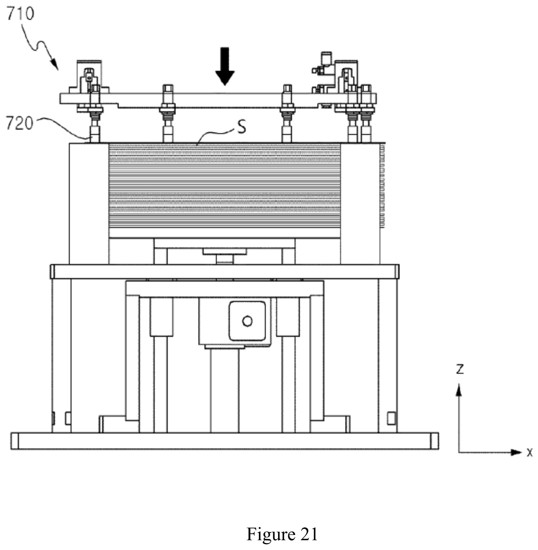

FIGS. 20 to 26 are exemplary diagrams depicting the process of preventing double-sheet feeding of an electrode S.

Referring to FIGS. 20 to 26, while the second suction unit 750 enters a work region SB, the suction section 710 is configured to lift one electrode S to a predetermined height and remove another electrode S that may be stuck.

First, as illustrated in FIG. 20, the first suction unit 720 of the suction section 710 may be disposed above the electrode S. The first suction unit 720 is in a suction-released state. And, as shown in FIG. 20, the first suction unit 720 may move downward and be brought into contact with the electrode S.

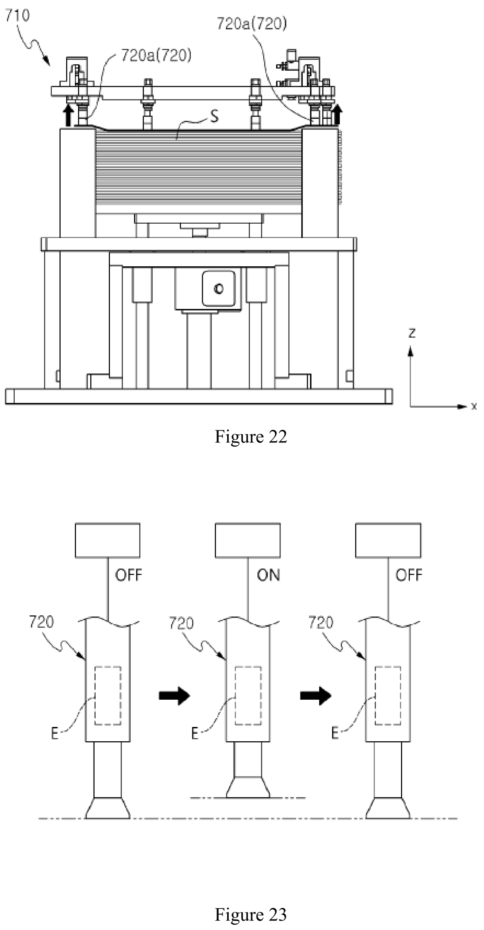

Next, as illustrated in FIG. 22, only a first suction unit 720a disposed at the outermost side among a plurality of first suction units 720 starts suction. As illustrated in FIG. 22, a suction tip of the first suction unit 720 in contact with the electrode S remains in an expanded state by an elastic force of an elastic member disposed inside when suction is released (OFF), and when suction is set (ON), the elastic force of the elastic member is overcome, the suction tip contracts, causing the first suction unit 720 lifted upward. When suction is switched to the OFF state while the suction tip is contracted, the suction tip expands due to the elastic force of the elastic member.

When only the first suction unit 720a disposed at the outermost side starts suction, both ends of the electrode S are lifted upward. Since both ends of the electrode S are lifted first by the first suction unit 720a, another electrode S may be prevented from sticking to a lower side of the electrode S.

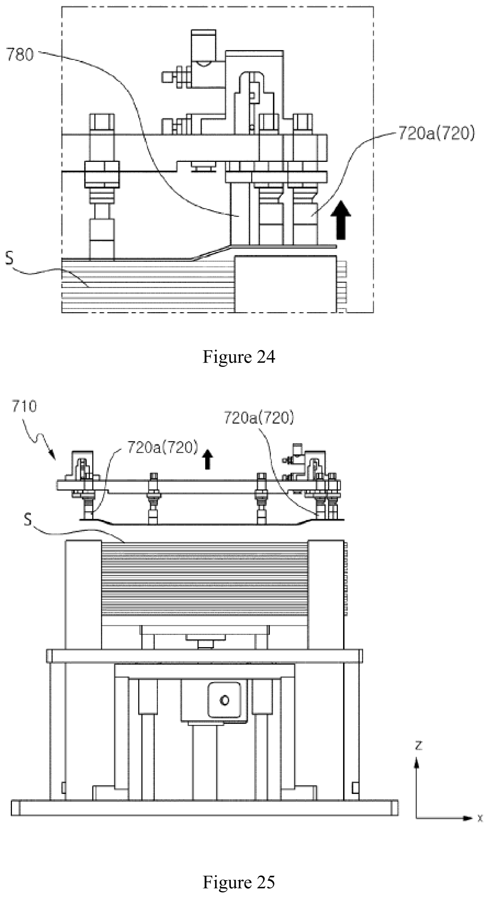

As illustrated in FIG. 24, the suction section 710 may include a push bar 780. When the first suction unit 720 moves downward, the push bar 780 may also moves downward and come into contact with the electrode S. The push bar 780 may be disposed adjacent to an inner side of the first suction unit 720a disposed at the outermost side.

During the process in which the first suction unit 720a disposed at the outermost side rises, the push bar 780 supports the electrode S, and thus both ends of the electrode S may be bent and lifted more easily.

Next, as shown in FIG. 25, all of the first suction units 720 move upward.

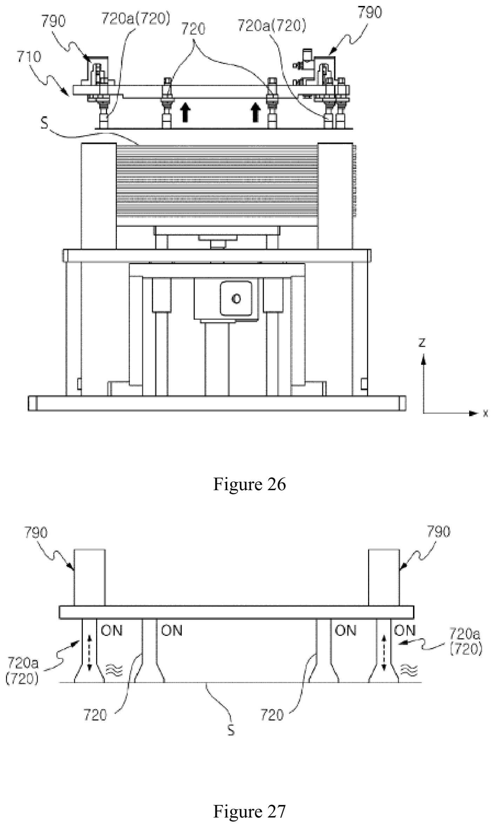

Next, as illustrated in FIG. 26, when the first suction units 720 except for the first suction unit 720a disposed at the outermost side are switched to a suction-on state, a central portion of the electrode S is also lifted, so that the electrode S is lifted in a flat state.

FIG. 27 is an exemplary diagram of a vibrator according to one embodiment of the present disclosure.

Referring to FIG. 27, a state is depicted in which an electrode S is lifted by the first suction unit 720 and vibration is applied in an up-and-down direction through a vibrator 790.

As illustrated in FIG. 27, a vibrator 790 may be connected to a first suction unit 720a disposed at the outermost side. The vibrator 790 is configured to move the first suction unit 720a, disposed at the outermost side, in the up-and-down direction and separate a lower electrode S attached to an upper electrode S.

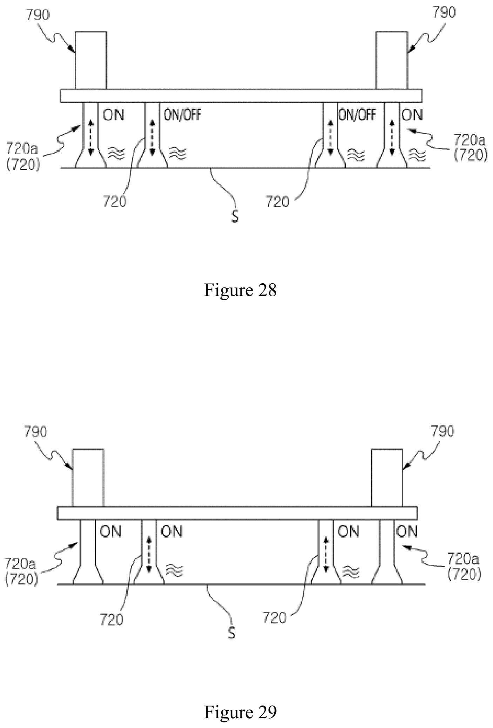

FIG. 28 is an exemplary diagram of a vibrator according to one embodiment of the present disclosure.

Referring to FIG. 28, another state is depicted in which vibration is applied in the up-and-down direction through the vibrator 790 and suction control while the electrode S is lifted by the first suction unit 720.

As shown in FIG. 12, the first suction unit 720a disposed at the outermost side moves back and forth in the up and down direction by the vibrator 790 while maintaining suction. At the same time, the first suction units 720, except for the first suction unit 720a disposed at the outermost side, may move back and forth in the up-and-down direction as suction is turned on and off.

FIG. 29 is an exemplary diagram of a vibrator according to one embodiment of the present disclosure.

Referring to FIG. 29, another state is depicted in which vibration is applied in the up-and-down direction through the vibrator 790 while the electrode S is lifted by the first suction unit 720.

As illustrated in FIG. 29, the vibrator 790 may be connected to a first suction unit 720 positioned at the center. The vibrator 790 is configured to move a first suction unit 720 disposed at the center in the up-and-down to detach a lower electrode S attached to an upper electrode S. At this point, all first suction units 720 are maintained in a suction state.

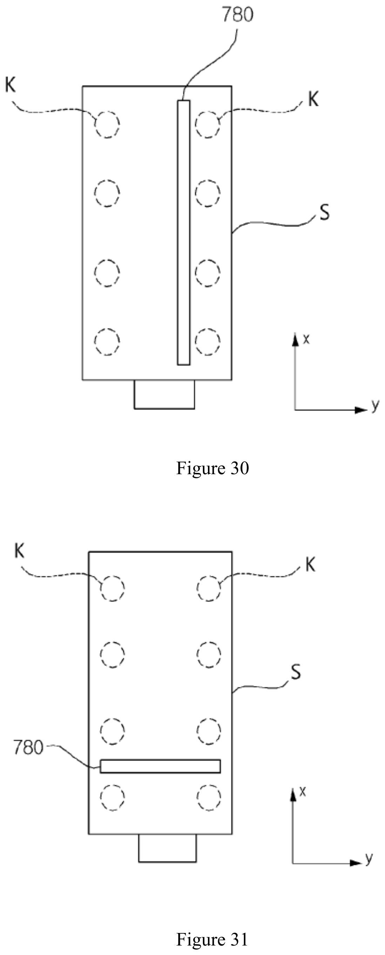

FIG. 30 is an exemplary diagram showing positions of electrodes and a push part.

Referring to FIG. 30, the push bar 780 may contact the electrode S between suction regions K of the first suction unit 720 in the front-back (y-axis) direction, and may contact the electrode S at a position offset to one side with reference to the longitudinal center of the electrode S.

FIG. 31 is an exemplary diagram depicting different positions of electrodes and a push part.

Referring to FIG. 31, the push bar 780 may contact the electrode S between the suction regions (K) of the first suction unit 720 based on the longitudinal (y-axis) direction of the electrode S, but may contact one side with reference to the longitudinal center of the electrode S.

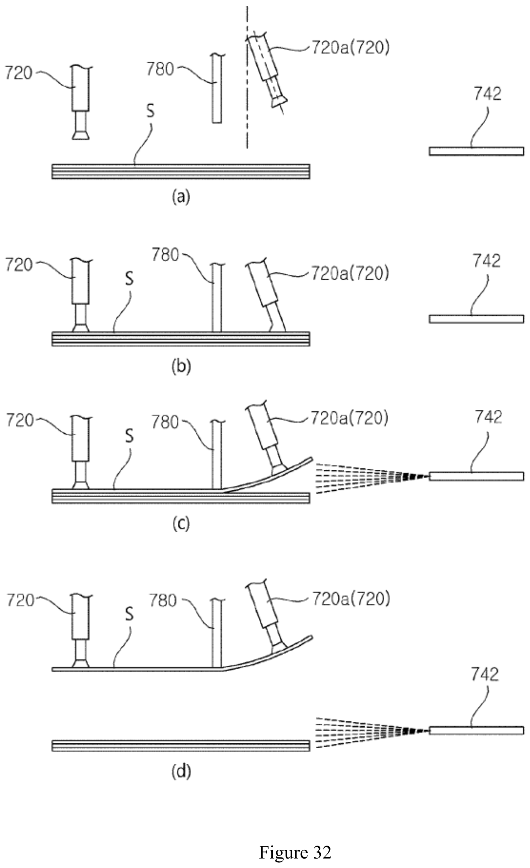

FIG. 32 is an exemplary diagram of a blower according to one embodiment of the present disclosure.

Referring to FIG. 32, the process in which the first suction unit lifts an electrode while a blower is provided is depicted.

Referring to FIG. 32, as shown in (a) of FIG. 32, the first suction unit 720a disposed at the outermost side may be disposed at an angle relative to the first suction unit 720 disposed at the center. This is to make it easier to lift both ends of the electrode S when lifting the electrode S by suction. A blower 260 may be disposed adjacent to the first suction unit 720a placed at the outermost side.

As shown in (b) of FIG. 32, the first suction unit 720 moves downward, and the first suction unit 720a disposed at the outermost side, the first suction unit 720 disposed at the center and a push bar(780) are brought into contact with the electrode S.

Thereafter, as shown in (c) of FIG. 32, when the first suction unit 720a disposed at the outermost side suctions the electrode S, both ends of the electrode S are lifted. With the both ends of the electrode S is lifted, a blower 742 blows air toward the electrode S. As such, if air is blown toward the electrode S while the both ends of the electrode S are lifted, the double-sheet feeding may be effectively prevented.

Next, as shown in (d) of FIG. 32, the first suction unit 720a moves upward so that the electrode S may be lifted.

In this way, the double-sheet feeding is prevented by the suction section 710, and the second suction unit 750 enters the work region SB while the electrode S is lifted.

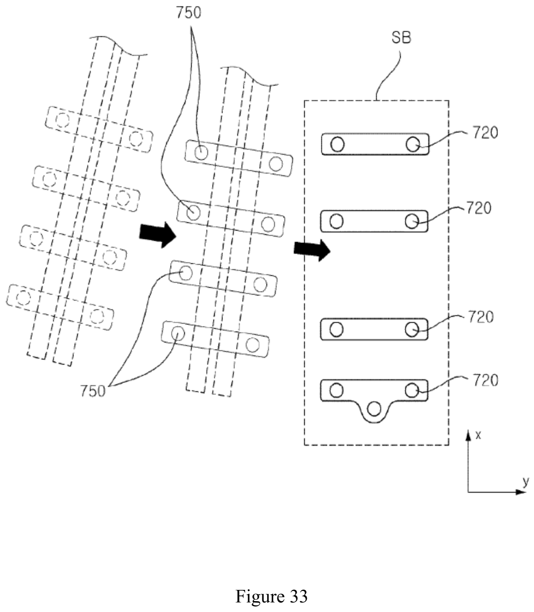

FIG. 33 is an exemplary diagram of a first suction unit and a second suction unit.

Referring to FIG. 33, a state in which the second suction unit 750 is aligned with the first suction unit 720 after the second suction unit 750 enters the work region SB is depicted.

Referring to FIG. 18 and FIG. 33, the suction section 710 is disposed in the work region SB located at the upper side of the magazine M. The second suction unit 750 is disposed to advance and retreat in the work region SB. Here, the work region SB refers to a region above the magazine M, where the second suction unit 750 or the first suction unit 720 lifts and suctions the electrode S loaded in the magazine M.

The suction device 700 has the arm portion 760 rotating about the axis C so that the second suction unit 750 may enter the work region SB or advance and retreat in the work region SB. When the arm portion 760 rotates to be positioned in the work region SB, the second suction unit 750 is positioned between the first suction units 720 in the front-back (y-axis) direction.

However, the present disclosure is not limited thereto, and the suction device 700 may be implemented so that the second suction unit 750 moves back and forth in a straight line to advance and retreat in the work region SB.

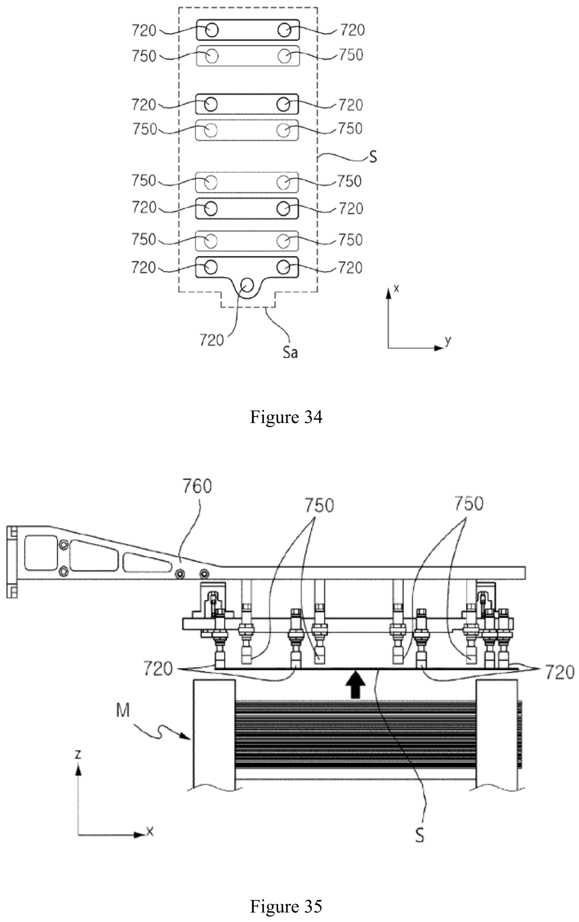

FIG. 34 is an exemplary diagram of a first suction unit and a second suction unit.

Referring to FIG. 34, a state in which the second suction unit 750 and the first suction unit 720 are aligned is depicted.

Referring to FIG. 19 and FIG. 34, when the second suction unit 750 enters the work region SB, the second suction unit 750 is aligned at a different position from the first suction unit 720 with reference to the front-back (y-axis) direction. Therefore, with reference to the width (x-axis) direction of the electrode S, a suction region of the second suction unit 750 and a suction region of the first suction unit 720 are different.

The second suction unit 750 and the first suction unit 720 may be aligned with reference to the front-back (y-axis) direction.

When viewed from the left-right (x-axis) direction, the second suction unit 750 and the first suction unit 720 may be disposed adjacent to each other to form a pair. This is to stably hold the electrode S when the second suction unit 750 and the first suction unit 720 alternately suction the electrode S.

With reference to the left-right (x-axis) direction, the first suction unit 720 may be disposed outside the second suction unit 750. Specifically, with reference to the left-right (x-axis) direction of the electrode S, the first suction unit 720 disposed at the outermost side among the plurality of first suction units 720 may be disposed further outward than a second suction unit 750 disposed at the outermost side among a plurality of second suction units 750.

In addition, when viewed from the left-right (x-axis) direction, the second suction unit 750 and the first suction unit 720 are disposed adjacent to each other to form a pair, and in one pair of the second suction units 750 and the first suction unit 720, the first suction unit 720 may be disposed closer to an end of the electrode in the left-right (x-axis) direction.

The second suction unit 750 and the first suction unit 720 may alternately suction the electrode S.

FIGS. 35 to 37 are exemplary diagrams depicting a loading process of an electrode S.

As illustrated in FIG. 35, when the second suction unit 750 of the suction device 700 enters the work region SB and the second suction unit 750 and the first suction unit 720 are aligned, the first suction unit 720 moves downward first and suctions an uppermost electrode S and lifts the electrode S. At this point, the second suction unit 750 is separated from the electrode S, and only the first suction unit 720 holds the electrode S. The first suction unit 720 may lift the electrode S to an appropriate height so that the electrode S does not touch the second suction unit 750.

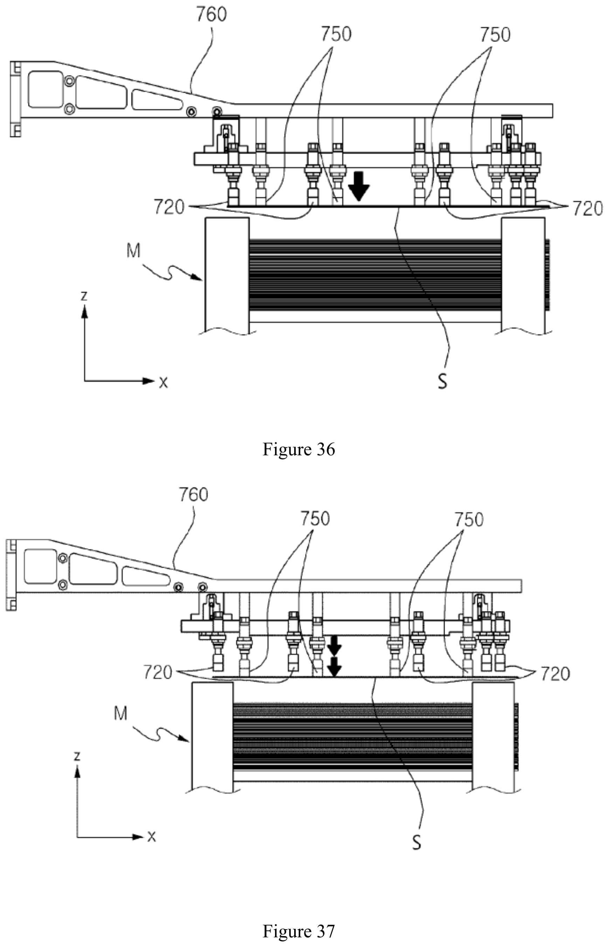

Next, as shown in FIG. 36, with the suction of the second suction unit 750 set, the second suction unit 750 moves downward and suctions and contacts the electrode S. And the suction of the first suction unit 720 is released.

Next, as illustrated in FIG. 37, when the first suction unit 720 is in a released state and the second suction unit 750 maintains suction while moving downward below the first suction unit 720, the electrode S is separated from the first suction unit 720. Accordingly, the electrode S is held solely by the second suction unit 750.

In the process in which the second suction unit 750 moves downward to push the electrode S so that the first suction unit 720 and the electrode S are separated, a lower electrode attached to an upper electrode may be separated.

The second suction unit 750 holding the electrode S by moving downward may rotate and insert the held electrode S into the process.

In this way, firstly, after lifting the electrode S in the suction section 710, the suction of the suction section 710 is released, and by holding the electrode S using the suction of the second suction unit 750, the double-sheet feeding may be prevented, and the loading process of the electrode S may be quickly performed so that the increase in the overall process speed may be met.

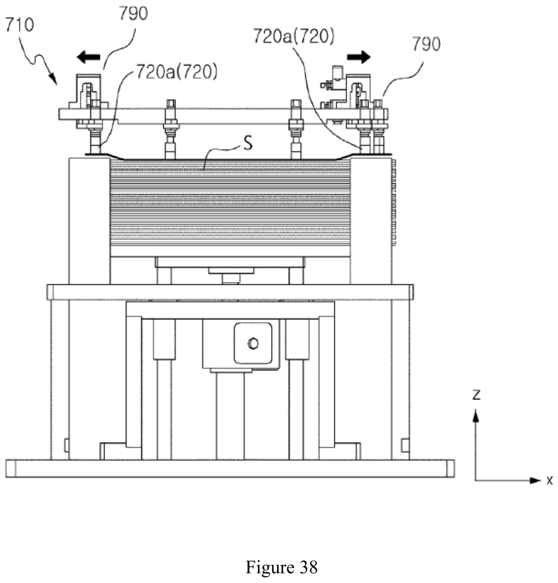

FIG. 38 is an exemplary diagram of a first suction unit.

Referring to FIG. 38, a state in which wrinkles of an electrode are straightened by the first suction unit is depicted.

Meanwhile, when the suctioned electrode S is shaken up and down by the vibrator 790, wrinkles may occur in the electrode S. When the wrinkles occur in the electrode S, there is a problem in that the electrode S transported to an alignment stage through the second suction unit 750 does not adhere closely to an upper surface of the alignment stage. That is, the alignment stage also uses suction to suction the electrode S placed on an upper surface of the alignment stage in order to correct the position of the electrode S. However, when the electrode S is placed on the alignment stage with wrinkles on the electrode S, the electrode S cannot be completely adhered to the upper surface of the alignment stage due to the wrinkles on the electrode S.

In this way, if the electrode S is not adhered to the upper surface of the alignment stage, an alarm occurs during the suction process of the alignment stage, or the alignment precision is reduced because the planar dimensions of the electrode S change due to wrinkles in the electrode S.

Accordingly, as illustrated in FIG. 38, after the first suction unit 720 shakes the suctioned electrode S up and down while suctioning the electrode S, when the vibrator 790 is moved slightly in a horizontal direction, wrinkles of the electrode S that occur when shaking the suctioned electrode S up and down may be straightened.

Since the electrode S is transported to the alignment stage by the second suction unit 750 with the wrinkles straightened, the electrode S may be well adhered to the upper surface of the alignment stage and fixed by suction, thereby preventing the occurrence of a suction failure alarm and improving the alignment precision.

Also, since the second suction unit 750 and the first suction unit 720 are separated and operate independently and the wrinkles of the electrode S are straightened by the first suction unit 720 rather than by the second suction unit 750, there is an advantage in that the operation of straightening the wrinkles of the electrode S may be performed without affecting the speed at which the second suction unit 750 supplies the electrode S to the alignment stage.

Hereinafter, a stacking method S100 performed by an stacking apparatus 1 will be described.

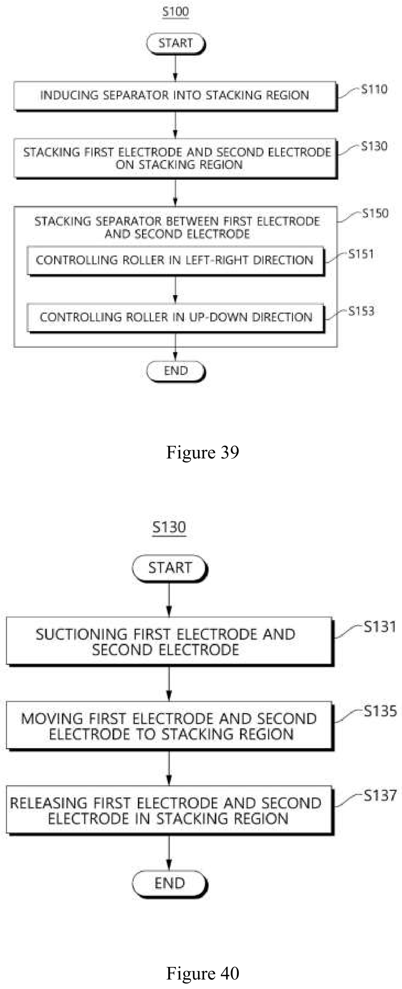

FIG. 39 is a flowchart of a stacking method according to one embodiment of the present disclosure.

Referring to FIG. 39, the stacking method S100 may include operation S110 of inducing a separator SP into a stacking region ST, operation S130 of stacking a first electrode S1 and a second electrode S2 on the stacking region ST, and operation S150 of stacking the separator SP between the first electrode S1 and the second electrode S2. The first electrode S1 is stacked on a separator SP that is stacked first, a separator SP is stacked thereon again, the second electrode S2 is stacked thereon, and a separator SP is stacked thereon again, so that the separator SP, the first electrode S1, the separator SP, and the second electrode S2 may be repeatedly stacked a plurality of times.

During stacking, the stacking region ST is in a stationary state, and the separator stacking device 100 may be placed above the stacking region ST.

First, the separator stacking device 100 may guide a continuously supplied sheet-shaped separator SP to the stacking region ST (S110). The separator stacking device 100 may be provided with a stacking roller 141 above the stacking region ST to guide the separator SP to the stacking region ST, and may further be provided with a mid-roller 145, an upper roller 147, and a denser 170 .

Next, the separator stacking device 100 may stack a separator SP so as to be inserted between the first electrode S1 and the second electrode S2 that are stacked in the form of single sheets within the stacking region ST (S130). In this case, the separator stacking device 100 may control the separator SP before stacking to reciprocate in the up-and-down (z-axis) direction and left-right (x-axis) direction. In this case, the reciprocating motion may be controlled by the driving unit 120 and the guider 150. Descriptions of other configurations are described in the descriptions with reference to FIGS. 1 to 13.

FIG. 40 is a flowchart of a stacking method according to one embodiment of the present disclosure.

Referring to FIG. 40, operation S130 of stacking the first electrode S1 and the second electrode S2 may include operation S131 of suctioning the first electrode S1 and the second electrode S2, operation S135 of moving the first electrode S1 and the second electrode S2 to the stacking region ST, and operation S137 of releasing the first electrode S1 and the second electrode S2 from the stacking region ST.

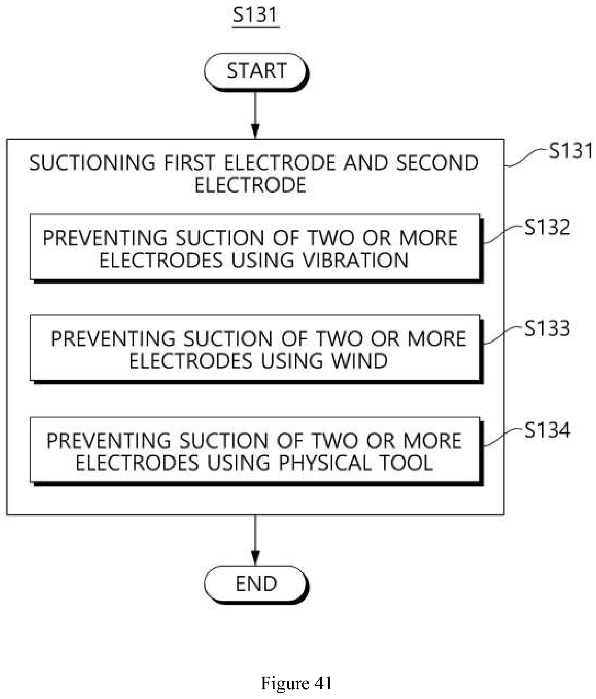

FIG. 41 is a flowchart of a stacking method according to one embodiment of the present disclosure.

Referring to FIG. 41, operation S131 of suctioning the first electrode S1 and the second electrode S2 may include operation S132 of preventing suction of two or more electrodes using vibration, operation S133 of preventing suction of two or more electrodes using wind, and operation S134 of preventing suction of two or more electrodes using a physical tool. Operations S132 to S134 are described in detail in the description of the suction device 700.

According to one embodiment of the present disclosure, when stacking an electrode and a separator, the separator may tightly wrap the electrode.

In addition, an electrode pack may be manufactured by moving the separator while the electrode is stationary.

In addition, a process speed may be increased by minimizing a time required for transporting electrodes during electrode stacking.

In addition, during transportation of the electrodes, suction of two or more electrodes is prevented.

Above, although some examples have been given and various preferred embodiments of the present disclosure have been described, the description of the various embodiments described in the "Specific Details for Carrying Out the Invention" section is merely exemplary, and those skilled in the art to which the present disclosure pertains will readily understand that they may carry out various modifications of the present disclosure or carry out equivalent implementations of the present disclosure based on the above description.

In addition, since the present disclosure may be implemented in various other forms, the present disclosure is not limited by the above description, and the above description is provided only to make the disclosure of the present disclosure complete and to fully inform a person having ordinary skill in the art to which the present disclosure belongs of the scope of the present disclosure, and it should be understood that the present disclosure is defined only by each claim of the claims.

### [Industrial Applicability]

The present disclosure may be used in the field of secondary battery manufacturing equipment.

## Claims

1. A stacking apparatus comprising:
an electrode stacking device configured to alternately and continuously stack a first electrode and a second electrode on a stacking region using a first rotary body that transports the first electrode and a second rotary body that transports the second electrode; and
a controller configured to control driving of the electrode stacking device,
wherein a first axis of the first rotary body and a second axis of the second rotary body are concentric with each other, and
wherein the controller is configured to control stacking of the first electrode through rotation of the first rotary body in the fixed stacking region and stacking of the second electrode through rotation of the second rotary body.

2. The stacking apparatus of claim 1,
wherein the first rotary body comprises a first arm portion configured to suction the first electrode disposed on a first stage through rotation of a first axis and transport the first electrode to the stacking region, and
wherein the second rotary body comprises a second arm portion configured to suction the second electrode disposed on a second stage through rotation of the second axis and transport the second electrode to the stacking region.

3. The stacking apparatus of claim 2, wherein the first rotary body comprises a third arm portion configured to transport the first electrode disposed in a first magazine to the first stage through simultaneous rotation with the first arm portion, and the second rotary body comprises a fourth arm portion configured to transport the second electrode disposed in a second magazine to the second stage through simultaneous rotation with the third arm portion.

4. The stacking apparatus of claim 3, wherein the first arm portion and the third arm portion, and the second arm portion and the fourth arm portion are disposed to be coupled to the first axis or the second axis, respectively, with an acute angle therebetween.

5. The stacking apparatus of claim 4, wherein the controller is configured to control the first rotary body and the second rotary body so that the first rotary body rotates within a range of 90 degrees between the stacking region and the first magazine, and the second rotary body rotates within a range of 90 degrees between the stacking region and the second magazine.

6. The stacking apparatus of claim 5, wherein the controller is configured to: control an operation of the separator stacking device that stacks a separator in a zigzag manner while reciprocating between a left edge and a right edge of the stacking region; and to control the separator stacking device to reciprocate along a two-dimensional trajectory in an up-down (z-axis) direction and a left-right (x-axis) direction so that the separator sequentially wraps one side and an upper surface of the first electrode, and after the second electrode is stacked on the separator, sequentially wraps the other side and an upper surface of the second electrode.

7. The stacking apparatus of claim 2, further comprising a gripper part configured to grip and transport an electrode pack for which stacking is completed,
wherein the controller is configured to control an entry movement of the gripper part into the stacking region and to control an avoidance movement of the first stage or the second stage so as not to interfere with the gripper part.

8. The stacking apparatus of claim 1, further comprising a separator stacking device configured to stack a separator, which is formed as a single continuous piece, between the first electrode and the second electrode and between the second electrode and the first electrode,
wherein the controller is configured to control an operation of stacking the separator along a two-dimensional trajectory in an up-down (z-axis) direction and a left-right (x-axis) direction while the stacking region is fixed.

9. The stacking apparatus of claim 8, wherein the separator stacking device comprises:
a frame installed in the stacking region;
a driving unit coupled to the frame through a first rotation shaft and configured to cause a reciprocating motion of the frame in the up-down (z-axis) direction and the left-right (x-axis) direction using a cam;
a roller coupled to the frame and configured to guide the separator to the stacking region;
a denser coupled to the frame and configured to control elasticity of the separator; and
a guider coupled to the frame and configured to guide the reciprocating motion of the frame to control a stacking trajectory of the roller.

10. The stacking apparatus of claim 9, wherein the frame comprises:
a lever coupled to the driving unit; and
a roller bracket coupled to the lever through a second rotation shaft and coupled to the roller.

11. The stacking apparatus of claim 10, wherein the lever comprises:
a power transmission unit coupled to the driving unit through the first rotation shaft;
a first trajectory center portion that determines a trajectory center of the lever; and
a moving part coupled to the roller bracket.

12. The stacking apparatus of claim 10, wherein the guider comprises a first guider that is slidably coupled to the roller bracket and guides a two-dimensional trajectory of the roller bracket in the up-down (z-axis) direction and the left-right (x-axis) direction.

13. The stacking apparatus of claim 11, wherein the guider further comprises a second guider that guides a position of the first trajectory center portion.

14. The stacking apparatus of claim 12, wherein the roller bracket comprises:
a second trajectory center portion coupled to the other end of the lever through the second rotation axis;
a guide coupling portion that is slidably coupled to the first guide; and
a roller coupling portion coupled to the roller.

15. The stacking apparatus of claim 12,
wherein the roller comprises a stacking roller configured to stack the separator on the stacking region,
wherein the stacking roller comprises a lower stacking roller and an upper stacking roller, and
wherein the controller is configured to control a motion trajectory of the roller bracket so that the lower stacking roller and the upper stacking roller are vertically disposed.

16. The stacking apparatus of claim 12, wherein the first guider comprises:
a vertical guide that guides the roller in a vertical direction;
a horizontal guide that guides the roller in a horizontal direction;
an inner rail plate that connects the vertical guide and the horizontal guide; and
an outer rail plate that fixes a vertical rail of the vertical guide.

17. The stacking apparatus of claim 14, wherein the controller is configured to:
control the guide coupling portion to move along the first guide; and
control a movement trajectory of the roller coupling portion so that the roller reciprocates along a two-dimensional arc-shaped trajectory in the up-down (z-axis) direction and the left-right (x-axis) direction within the stacking region.

18. The stacking apparatus of claim 13, wherein the second guider comprises:
a base provided with a third rotation shaft;
a rotary rail that rotates in combination with the third rotation shaft; and
a slider that moves along the rotary rail.

19. The stacking apparatus of claim 1, further comprising a suction device configured to perform suction of the first electrode and the second electrode that wait in a suction region before stacking of the first electrode and the second electrode,
wherein the suction device comprises:
a suction section that suctions one electrode among electrodes loaded in a magazine through movement control in an up-and-down (z-axis) direction in the suction region using the first suction unit; and
a second suction unit that is coupled to the first rotary body and the second rotary body and alternately suctions the electrode with the first suction unit.

20. The stacking apparatus of claim 19, wherein the controller is configured to:
at a timing of alternation between the first suction unit and the second suction unit,
drive the first rotary body and the second rotary body that are coupled to the second suction unit,
set suction of the second suction unit, and control downward movement of the second suction unit while releasing suction of the first suction unit.

21. The stacking apparatus of claim 19, wherein the second suction unit is positioned above the first suction unit so as to alternately be positioned above an electrode from an upper side of the electrode.

22. The stacking apparatus of claim 19, wherein the first suction unit and the second suction unit are provided as a plurality, and a first suction unit disposed at an outer side among the plurality of first suction units is disposed at an inclination with respect to a vertical direction.

23. The stacking apparatus of claim 22, wherein the controller is configured to control the second suction unit to enter between different first suction units.

24. The stacking apparatus of claim 22, further comprising a blower disposed around the first suction unit disposed at the outer side,
wherein the controller is configured to control the first suction unit to blow air horizontally toward a lower surface of the electrode while the first suction unit suctions the electrode.

25. The stacking apparatus of claim 22, further comprising a vibrator coupled to at least some of the plurality of first suction units,
wherein the controller is configured to control the vibrator to vibrate in an up-and-down (z-axis) direction.

26. The stacking apparatus of claim 25, wherein the controller is configured to control a first suction unit not coupled to the vibrator to vibrate in the up-down (z-axis) direction by ON/OFF control of suction.

27. The stacking apparatus of claim 25, wherein the controller is configured to control the vibrator to vibrate horizontally to remove wrinkles on the electrode during suction of the first suction unit.

28. A stacking method performed by a stacking apparatus installed in a stacking region, the method comprising:
inducing a continuously supplied sheet-shaped separator into the stacking region;
alternately stacking a plurality of first electrodes and a plurality of second electrodes on the stacking region; and
stacking the separator between the plurality of first electrodes and the plurality of second electrodes,
wherein stacking the separator comprises:
controlling a roller so that the separator positioned at a stacking start point reciprocates in a left-right (x-axis) direction; and
controlling the separator at the stacking start point to reciprocate in an upward (+z-axis) direction and a downward (-z-axis) direction between a movement in a rightward (-x-axis) direction and a movement in a leftward (+x-axis) direction.

29. The stacking method of claim 28, wherein stacking the electrodes comprises:
an electrode suctioning operation of suctioning the first electrode and the second electrode disposed in a storage region; and
an electrode transporting operation of moving the first electrode and the second electrode, which are suctioned, to the stacking region; and
an electrode releasing operation of placing the first electrodes and the second electrodes down on the stacking region.

30. The stacking method of claim 29, wherein the electrode suctioning operation comprises preventing two or more electrodes from being suctioned due to static electricity by using at least one method among a method using vibration, a method using wind, and a method using a physical tool.

31. The stacking method of claim 29, wherein the electrode transporting operation is transporting the first electrode and the second electrode using a rotary body that rotates within an acute angle range.
